# EUROPÄISCHE PATENTSCHRIFT

(11) **EP 1 633 905 B1**
(45) Veröffentlichungstag und Bekanntmachung des Hinweises auf die Patenterteilung: **12.09.2007**
(21) Anmeldenummer: 04733319.0
(22) Anmeldetag: 17.05.2004
(51) Int. Cl.: C23C 22/16, C23C 22/18, C23C 22/36, C23C 22/73

(54) **BESCHICHTUNG METALLISCHER OBERFLÄCHEN MIT WASSERSOFFPEROXID UND NITRO-GUANIDIN ENTHALTENDEN PHOSPHATIERUNGSLÖSUNGEN**
COATING OF METAL SURFACES WITH PHOSPHATING SOLUTIONS CONTAINING HYDROGEN PEROXIDE AND NITRO-GUANIDIN
REVETEMENT DE SURFACES METALLIQUES PAR DES SOLUTIONS DE PHOSPHATATION CONTENANT DU PEROXIDE D'HYDROGENE ET DU NITRO-GUANIDIN

(30) Priorität: 23.05.2003 DE 10323305
(43) Veröffentlichungstag der Anmeldung: 15.03.2006
(73) Patentinhaber: Chemetall GmbH, 60487 Frankfurt (DE)
(72) Erfinder: NITSCHKE, Thomas, 61381 Friedrichsdorf (DE); REIN, Rüdiger, 35236 Breidenbach (DE); SCHÖNFELDER, Eckart, 65510 Idstein (DE); SCHUBACH, Peter, 61130 Nidderau/Windecken (DE); SPECHT, Jürgen, 63110 Rodgau (DE)
(74) Vertreter: Hübner, Günter
(86) Internationale Anmeldenummer: PCT/EP2004/005282
(87) Internationale Veröffentlichungsnummer: WO 2004/104266

(56) Entgegenhaltungen:
- EP-A- 0 141 341
- EP-B- 0 922 123
- WO-A-99/07916
- WO-A-02/070781
- WO-A-02/070782
- DE-A- 2 327 304
- DE-A- 2 739 006
- DE-A- 10 118 552
- DE-C- 977 633

## Beschreibung

Die Erfindung betrifft ein Verfahren zur Beschichtung von metallischen Oberflächen mit einer Phosphatierungslösung, die sowohl Wasserstoffperoxid, als auch mindestens eine Guanidin-Verbindung wie Nitroguanidin enthält, die entsprechende Phosphatierungslösung sowie die Verwendung der nach dem erfindungsgemäßen Verfahren beschichteten Gegenstände.

Die Ausbildung von Phosphatschichten auf metallischen Gegenständen wird seit Jahrzehnten mit recht unterschiedlichen Zusammensetzungen genutzt. In erster Linie dienen diese Beschichtungen als Schutz vor Korrosion und zur Erhöhung der Haftfestigkeit einer nachfolgenden Schicht wie z.B. einer Lackschicht. Die Phosphatschicht hat dabei oft eine Schichtdicke im Bereich von 1 bis 30 µm.

Phosphatüberzüge werden in großem Umfang als Korrosionsschutzschichten, als Haftgrund für Lacke und andere Beschichtungen sowie gegebenenfalls als Umformhilfe unter einer nachfolgend aufgebrachten Gleitmittelschicht zum Kaltumformen oder auch als Beschichtung zum Einstellen der Drehmomente von Spezialschrauben für das automatische Schrauben eingesetzt. Vor allem wenn die Phosphatüberzüge als Schutz für eine kurze Zeit insbesondere der Lagerung verwendet und dann z.B. lackiert werden, werden sie als Vorbehandlungsschicht vor dem Lackieren bezeichnet. Wenn auf den Phosphatüberzug jedoch keine Lackschicht und keine andersartige organische Beschichtung folgt, wird von Behandlung anstelle von Vorbehandlung gesprochen. Diese Überzüge werden auch als Konversionsschichten bezeichnet, wenn mindestens ein Kation aus der metallischen Oberfläche, also der Oberfläche des metallischen Gegenstands, herausgelöst und zum Schichtaufbau mitverwendet wird.

Die Beschichtung von metallischen Oberflächen mit Phosphatschichten kann in vielfältiger Weise erfolgen. Oft werden hierbei Zink-, Mangan- oder/und Nickel-haltige Phosphatierungslösungen eingesetzt. Ein Teil der in den Bädern bzw. Anlagen auf ihrer Oberfläche zu beschichtenden metallischen Substrate kann auch einen Anteil an Aluminium bzw. Aluminiumlegierungen aufweisen, der gegebenenfalls zu Problemen führen kann. Die Phosphatschicht(en) soll(en) meistens zusammen mit mindestens einer nachfolgend aufgebrachten Lackschicht bzw. lackähnlichen Beschichtung einen guten Korrosionsschutz und eine gute Lackhaftung aufweisen. Wenn mehr als eine Phosphatschicht aufgebracht wird, wird meistens von Vor- und Nachphosphatieren gesprochen. Die gleichzeitige Phosphatierung von Substraten mit unterschiedlicher metallischer Oberfläche hat an Bedeutung zugenommen. Insbesondere wächst der Anteil an Aluminium-haltigen Oberflächen in solchen Systemen, so dass es leichter und öfter als früher zu Problemen bei der Phosphatierung in solchen Systemen kommt.

Aufgrund der Giftigkeit und der Unverträglichkeit mit der Umwelt sind erhöhte Schwermetall-Gehalte wie z.B. von Nickel in der Phosphatierungslösung, die zu unvermeidbaren hohen Schwermetall-Gehalten im Abwasser, im Phosphatschlamm und im Schleifstaub führen, weniger vertretbar. Es gibt daher etliche Ansätze, mit Nickel-freien oder zumindest Nickel-ärmeren Phosphatierungslösungen zu arbeiten. Diese Phosphatierungslösungen haben sich bisher jedoch noch nicht in weitem Ausmaß durchgesetzt, sondern zeigen oft noch deutliche Nachteile im Vergleich zu den Nickel-reichen Phosphatierverfahren. Wenn bisher mit geringen Gehalten an Nickel in der Automobilindustrie phosphatiert wurde, ergaben sich gelegentlich Probleme mit einer schwankenden Lackhaftung, so dass diese Versuche nicht weitergeführt wurden. Darüber hinaus ist es das Bestreben, auch giftige Schwermetalle wie z.B. Cadmium und Chrom selbst in geringen Mengen zu vermeiden.

Beim Zink-Phosphatieren wird häufig eine Beschleunigung durch Nitrat und Nitrit gewählt. Hierbei braucht teilweise nur Nitrat zugesetzt zu werden, da sich hieraus auch selbständig über eine Redoxreaktion ein geringer Nitrit-Gehalt bildet. Solche Phosphatiersysteme sind häufig gut und kostengünstig. Die Phosphatiersysteme mit Nitrat- oder/und Nitrit-Zusatz sind insbesondere für Aluminium-reiche Oberflächen besonders bevorzugt. Derartige Phosphatiersysteme haben jedoch den Nachteil, dass die hierbei genutzten hohen Gehalte an Nitrat meistens in Höhe von etwa 3 bis 15 g/L Nitrat gehalten werden und dadurch das Abwasser sehr stark belasten. Aufgrund der verschärften Umweltanforderungen besteht die Notwendigkeit, störende Abwasserinhalte soweit wie möglich zu verringern oder aufwendig chemisch zu behandeln.

Andererseits sind Zink-reiche Phosphatierungslösungen bekannt, die als Beschleuniger nur Wasserstoffperoxid enthalten. Aus Gründen der Umweltfreundlichkeit allein ist der Beschleuniger Wasserstoffperoxid ideal, da sich aus Wasserstoffperoxid nur Wasser bildet. Es ist aber auch bekannt, dass das Zink Phosphatieren bei Tauchverfahren auf den Oberflächen von Stahl und anderen Eisenwerkstoffen häufig zu sehr dünnen Phosphatschichten führt, wenn als Beschleuniger allein Wasserstoffperoxid eingesetzt wird, wobei sich dabei vielfach eine blaue Interferenzfarbe zeigt. Anstelle der sogenannten schichtbildenden Phosphatierung, die etwas dickere Phosphatschichten als die sogenannte nicht-schichtbildende Phosphatierung ausbildet und die üblicherweise beim Zink-Phosphatieren angewandt wird, stellen sich dann die Verhältnisse der nicht-schichtbildenden Phosphatierung ein. Einzelheiten hierzu können Werner Rausch: Die Phosphatierung von Metallen, Saulgau 1988 (siehe insbesondere die Seiten 109 -118), entnommen werden. Derartige Schichten weisen meistens Schichtdicken bis etwa 0,5 µm bzw. Schichtgewichte bis etwa 1 g/m² auf. Derartige Phosphatschichten sind für viele Einsatzzwecke von unzureichender Qualität, insbesondere bezüglich ihrer Korrosionsbeständigkeit. Die Phosphatschichten, die allein mit dem Beschleuniger Wasserstoffperoxid hergestellt wurden, zeigen relativ große Phosphatkristalle, so dass vergleichsweise rauhe, ungleichmäßige und unebene Phosphatschichten entstehen. Hierbei treten oft tafelige Phosphatkristalle auf. Selbst in den besten Wasserstoffperoxid-beschleunigten Phosphatiersystemen konnte eine durchschnittliche Kantenlänge der Phosphatkristalle von weniger als 10 µm nicht sicher eingehalten werden. Daher sind kleinere Phosphatkristalle als bei diesen Phosphatierungssystemen in den Phosphatschichten bevorzugt.

Andererseits beschreiben mehrere Publikationen das Zink-Phosphatieren allein mit Nitroguanidin. Hierbei entstehen keine zu dünnen Phosphatschichten auf Stahl. Die durchschnittliche Kantenlänge der Phosphatkristalle liegt oft im Bereich von etwa 5 bis 20 µm und ermöglicht dabei feinkörnige, gleichmäßige, ebene Phosphatschichten und einen weicheren, gut entfernbaren Schlamm. Aber das Zink-Phosphatieren allein mit diesem Beschleuniger hat den Nachteil, dass vergleichsweise hohe Konzentrationen an Nitroguanidin - teilweise sogar im Bereich von 0,5 bis 3 g/L - einzusetzen sind, dass Nitroguanidin in der Phosphatierungslösung nur mit aufwendiger Analytik wie z.B. HPLC ausreichend genau zu bestimmen ist, dass bei einem Gehalt von mindestens etwa 2,8 glL in der Phosphatierungslösung beim Abkühlen auf weniger als etwa 30 °C Nitroguanidin auskristallisieren kann und sich dann ungenutzt im Schlamm anreichert und gegebenenfalls auch auf den zu phosphatierenden metallischen Oberflächen ablagert und zu Lackfehlern führen kann und dass die hierbei erhöhten Gehalte an diesem vergleichsweise teuren Beschleuniger zu deutlich höheren Rohstoffkosten führen, da Nitroguanidin die weitaus teuerste Komponente beim Phosphatieren ist.

Bei diesen zuvor genannten Phosphatierungssystemen ist üblicherweise eine Phosphatierungstemperatur im Bereich von etwa 48 bis 60 °C erforderlich.

DE-C3 23 27 304 benennt als Beschleuniger zum Aufbringen von Zink-Phosphatüberzügen auf metallischen Oberflächen Wasserstoffperoxid, insbesondere mit einem Gehalt von 0,03 bis 0,12 g/L in der Phosphatierungslösung.

DE-C2 27 39 006 beschreibt ein Verfahren zur Oberflächenbehandlung von Zink oder Zinklegierungen mit einer wässerigen, sauren, nitrat- und ammoniumfreien Phosphatierungslösung, die einen hohen Gehalt an Nickel oder/und an Kobalt sowie 0,5 bis 5 g/L Wasserstoffperoxid und gegebenenfalls auch Borfluorid oder freies Fluorid enthält. Die Beispiele führen Zinkphosphatierungslösungen an, die neben einem Gehalt an 2 bis 6,2 g/L Nikkel oder/und an 1 bis 6,2 g/L Kobalt 1,1 oder 2 g/L Wasserstoffperoxid und teilweise zusätzlich auch einen Gehalt an 4,5 g/L Borfluorid aufweisen.

EP-B1 0 922 123 schützt wässerige phosphathaltige Lösungen zur Erzeugung von Phosphatschichten auf metallischen Oberflächen, die Phosphat, 0,3 bis 5 g/L Zink und 0,1 bis 3 g/L Nitroguanidin enthalten. Die Beispiele weisen einen Nitroguanidin-Gehalt von 0,5 bzw. 0,9 g/L aus.

DE-A1 101 18 552 lehrt ein Zink-Phosphatierverfahren, bei dem ein oder mehrere Beschleuniger eingesetzt werden können, die ausgewählt werden aus Chlorat, Nitrit, Nitrobenzolsulfonat, Nitrobenzoat, Nitrophenol bzw. Verbindungen auf Basis von Wasserstoffperoxid, Hydroxylamin, reduzierendem Zucker, organischem N-Oxid wie z.B. N-Methylmorpholin und organischer Nitroverbindung wie z.B. Nitroguanidin, Nitroarginin und Nitrofurfurylidendiacetat. Der Gehalt der Phosphatierungslösung an derartigen organischen Nitroverbindungen kann, soweit nicht nur andere Beschleuniger eingesetzt werden, im Bereich von 0,5 bis 5 g/L liegen.

Bei diesen oben genannten und bei ähnlichen Publikationen wurde gefunden, dass zum Zinkphosphatieren entweder Wasserstoffperoxid oder Nitroguanidin verwendet wird oder eine Auswahl aus sehr vielen Beschleunigern angesprochen wird. Aber dennoch hat keine der geprüften Publikationen dabei ein Beispiel angeführt, bei dem gleichzeitig Wasserstoffperoxid und Nitroguanidin als Beschleuniger eingesetzt werden.

DE-C 977 633 beschreibt in den Ausführungsbeispielen Zink-Phosphatlösungen, die ausgehend von primärem Zinkphosphat, Zn(H₂PO₄)₂, gleichzeitig einerseits Nitroguanidin oder mindestens einen anderen Stickstoff-haltigen Beschleuniger und andererseits Wasserstoffperoxid enthalten. Die Konzentration des oder der organischen Beschleuniger soll im Phosphatierbad ständig über 1 g/L gehalten werden. Die Beispiele gehen offensichtlich von einer anfänglichen Zusammensetzung von etwa 13,5 g/L Zink, 38 g/L PO₄ und beim Beispiel 1 von 2 g/L Nitroguanidin und 2 g/L Wasserstoffperoxid, beim Beispiel 2 von 1 g/L Nitroguanidin und 2 g/L H₂O₂, beim Beispiel 3 von 3 g/L Nitroguanidin und 1 g/L H₂O₂ bzw. beim Beispiel 4 von 2,3 g/L Nitroguanidin und einem nicht näher genannten hohen Wasserstoffperoxid-Gehalt aus. Hierbei wird bei ungewöhnlich hohen Temperaturen, 85 bzw. 95 °C, gearbeitet. Wenn jedoch die Arbeitstemperatur auf 60 °C gesenkt wurde, wurde für das Phosphatieren bereits die für heutige Verhältnisse unakzeptable Zeit von 10 Minuten benötigt. Der Mittelwert des in dieser Patentschrift genannten Verbrauchs ist bezüglich Wasserstoffperoxid etwa viermal so hoch wie bei dem erfindungsgemäßen Verfahren dieser Anmeldung, bezüglich Nitroguanidin etwa sechsunddreißigmal so hoch wie bei dem erfindungsgemäßen Verfahren.

WO 99/07916 A1 offenbart Phosphatierverfahren unter Verwendung eines Beschleunigers auf Basis eines organischen N-Oxids. Nitroguanidin ist jedoch kein organisches N-Oxid.

WO 02/070781 A2 ist auf das Phosphatieren ohne Anwesenheit von Nickel mit teilweise erhöhten Gehalten an Kationen gerichtet. Es werden sehr viele verschiedene Beschleuniger, aber fast keine Kombinationen von Beschleunigern angeführt.

WO 02/070782 A2 betrifft ZinkMangan-Phosphatierungen, deren Phosphatierungslösungen mehr Mangan als Zink enthalten.

Der Gegenstand der Patentanmeldung DE 103 20 313 wird, insbesondere bezüglich der Zusammensetzungen, Verfahrensschritte, Ausführungsbeispiele und Anwendungen ausdrücklich in diese Anmeldung einbezogen.

Es bestand daher die Aufgabe, ein Verfahren zum Phosphatieren von metallischen Oberflächen bereitzustellen, bei dem die Stickstofffracht von Abwässern des Phosphatierens besonders gering gehalten werden kann und das auch zur Beschichtung von geringen und hohen Anteilen an Aluminium-haltigen Oberflächen geeignet ist. Die hierbei gebildete Phosphatschicht soll geschlossen, von feinkörniger Kristallinität (durchschnittliche Kantenlänge kleiner 20 µm), und bei zumindest einem Teil der Zusammensetzungen von ausreichend hoher Korrosionsbeständigkeit und von ausreichend guter Lackhaftung sein. Das Verfahren sollte möglichst einfach und sicher eingesetzt werden können.

Es wurde überraschend gefunden, dass durch den Zusatz von Nitroguanidin zu einer Wasserstoffperoxid enthaltenden Phosphatierungslösung die Phosphatschichtdicken deutlich dicker und korrosionsbeständiger ausgebildet werden. Hierbei werden auf Oberflächen von Eisenwerkstoffen Schichtgewichte insbesondere im Bereich von 1,5 bis 3 g/m² ausgebildet, auf Oberflächen von Aluminium reichen Werkstoffen-Schichtgewichte insbesondere im Bereich von 1 bis 6 g/m² und auf Oberflächen von Zink-reichen Werkstoffen Schichtgewichte insbesondere im Bereich von 2 bis 6 g/m². Beim Kontaktieren der Phosphatierungslösung durch Spritzen oder/und Tauchen werden dabei meistens 0,8 bis 8 g/m² erzielt. Durch Aufwalzen und Auftrocknen - in sogenannten no-rinse-Verfahren - wie z.B. bei Bandverfahren können noch weit dickere Phosphatschichten geschaffen werden.

Umgekehrt wurde ermittelt, dass durch den Zusatz von Wasserstoffperoxid zu einer Nitroguanidin enthaltenden Phosphatierungslösung die Phosphatschichten deutlich kostengünstiger bei gleicher Qualität des Phosphatierverfahrens und der Phosphatschichten ausgebildet wurden. Hierbei ließen sich die Vorteile des Nitroguanidins und des Wasserstoffperoxids kombinieren.

Die Aufgabe wird gelöst durch ein Verfahren zur Behandlung oder Vorbehandlung von Oberflächen metallischer Gegenstände - wie z.B. von Teilen, Profilen, Bändern oder/und Drähten mit metallischen Oberflächen, bei denen gegebenenfalls mindestens ein Anteil dieser Oberflächen aus Aluminium oder/und mindestens einer Aluminiumlegierung bestehen kann und gegebenenfalls die weiteren metallischen Oberflächen vorwiegend aus Eisenlegierungen, Zink oder/und Zinklegierungen bestehen können -, mit einer Zink und Phosphat enthaltenden, sauren, wässerigen Lösung, bei dem die Phosphatierungslösung im Wesentlichen aus
- 0,1 bis 10 g/L Zink,
- gegebenenfalls 0,1 bis 10 g/L Mangan,
- gegebenenfalls 0,01 bis 1,8 g/L Nickel,
- Natrium, Kalium oder/und Ammonium, wobei die Summe an Natrium, Kalium und Ammonium 0,025 bis 70 g/L beträgt,
- 4 bis 50 g/L Phosphat, berechnet als PO₄,
- mindestens 0,03 und bis zu 1,5 g/L an mindestens einer Guanidin-Verbindung, die mindestens eine Nitrogruppe aufweist, berechnet als Nitroguanidin,
- mindestens 0,001 und bis zu 0,3 g/L Wasserstoffperoxid,
- gegebenenfalls 0,1 bis 30 g/L Nitrat,
- gegebenenfalls 0,01 bis 0,5 g/L Chlorid,
- gegebenenfalls 0,005 bis 5 g/L Sulfat,
- gegebenenfalls 0,005 bis 1 g/L freies Fluorid,
- gegebenenfalls 0,005 bis 6 g/L Gesamtfluorid und
- gegebenenfalls 0,005 bis 5 g/L Komplexfluorid
besteht und eine Temperatur von weniger als 80 °C aufweist.

Es wurde überraschend gefunden, dass die gleichzeitige Anwesenheit mindestens einer Guanidin-Verbindung, die mindestens eine Nitrogruppe aufweist wie z.B. Nitroguanidin, und von Wasserstoffperoxid in der Phosphatierungslösung sich auf Rohstoffverbrauch, Rohstoffkosten, Schichtausbildung und Schlammausbildung besonders vorteilhaft auswirkt. Es war dabei ferner überraschend, dass es sogar möglich ist, mit vergleichsweise geringen Gehalten an Guanidin-Verbindung(en) und Wasserstoffperoxid hochwertige Beschichtungsergebnisse zu erzielen.

Die saure, wässerige Zusammensetzung, die hier u.a. als Phosphatierungslösung bezeichnet wird, aber auch das zugehörige entsprechende Konzentrat bzw. die zugehörige Ergänzungslösung, kann eine Lösung oder eine Suspension sein, da die zwangsläufig entstehenden Fällungsprodukte aus der Lösung eine Suspension gestalten, soweit sich ein gewisser Anteil an Fällungsprodukten in der Schwebe befindet.

Die Phosphatierungslösung enthält vorzugsweise mindestens 0,2 g/L oder 0,3 g/L Zink, besonders bevorzugt mindestens 0,4 g/L, ganz besonders bevorzugt mindestens 0,5 g/L, insbesondere in manchen Situationen mindesstens 0,8 g/L, in manchen Fällen mindestens 1,2 g/L, mindestens 1,7 g/L, mindestens 2,4 g/L oder sogar mindestens 4 g/L. Sie enthält vorzugsweise bis zu 8 g/L Zink, besonders bevorzugt bis zu 6,5 g/L, ganz besonders bevorzugt bis zu 5 g/L, insbesondere in manchen Situationen bis zu 4 g/L, vor allem bis zu 3 g/L oder bis zu 2 g/L.

Die Phosphatierungslösung enthält vorzugsweise mindestens 5 g/L Phosphat, besonders bevorzugt mindestens 7 g/L, ganz besonders bevorzugt mindestens 10 g/L, insbesondere in manchen Situationen mindestens 14 g/L, mindestens 18 g/L, mindestens 24 g/L oder sogar mindestens 30 g/L. Sie enthält vorzugsweise bis zu 40 g/L Phosphat,-besonders bevorzugt bis zu 35 g/L, ganz besonders bevorzugt bis zu 30 g/L, insbesondere in manchen Situationen bis zu 25 g/L, vor allem bis zu 20 g/L oder bis zu 15 g/L. Das Verhältnis von Zink zu Phosphat kann vorzugsweise im Bereich von 1 : 40 bis 1 : 4, besonders bevorzugt im Bereich von 1 : 30 bis 1 : 5, ganz besonders bevorzugt im Bereich von 1 : 20 bis 1 : 6 gehalten werden.

Die Gehalte an Zink und Phosphat können hierbei sehr von dem gewünschten Konzentrationsniveau abhängen, aber teilweise auch vom Gehalt an anderen Kationen wie z.B. an Mn oder/und Ni. Insbesondere die Gehalte an Zink bzw. Zink und Mangan können mit den Gehalten an Phosphat korreliert sein. Das Verhältnis sowohl des Gesamtgehalts an Zink und Mangan zu Phosphat, als auch das Verhältnis des Gesamtgehalts an Zink, Mangan und Nickel zu Phosphat kann vorzugsweise im Bereich von 1 : 40 bis 1 : 3, besonders bevorzugt im Bereich von 1 : 30 bis 1 : 3,5, ganz besonders bevorzugt im Bereich von 1 : 20 bis 1 : 4 gehalten werden.

Die Phosphatierungslösung enthält mindestens 0,03 g/L mindestens einer mindestens eine Nitrogruppe aufweisenden Guanidin-Verbindung wie z.B. Nitroguanidin oder/und mindestens ein Alkylnitroguanidin, besonders bevorzugt mindestens 0,05 g/L, ganz besonders bevorzugt mindestens 0,07 g/L, insbesondere mindestens 0,09 g/L oder sogar mindestens 0,12 g/L. Sie enthält bis zu 1,5 g/L, insbesondere bis zu 1,2 g/L, vor allem bis zu 0,8 g/L oder bis zu 0,5 g/L mindestens einer mindestens eine Nitrogruppe aufweisenden Guanidin-Verbindung. Als Alkylnitroguanidine können z.B. Methylnitroguanidin, Ethylnitroguanidin, Buthylnitroguanidin oder/und Propylnitroguanidin eingesetzt werden. Aus Nitroguanidin bildet sich hierbei bevorzugt Aminoguanidin. Die mindestens eine Nitrogruppe (NO₂) der Guanidin-Verbindung(en) wird im Rahmen einer Redoxreaktion zu mindestens einer Aminogruppe (NH₂) umgesetzt. Hierdurch wirkt der Beschleuniger als Oxidationsmittel. In der erfindungsgemäßen Phosphatierungslösung sollte aufgrund der starken Oxidationsmittel im wesentlichen kein Nitrit enthalten sein und sollten daher auch im wesentlichen keine nitrosen Gase (NOₓ) gebildet werden können.

Die Phosphatierungslösung enthält mindestens 0,001 g/L Wasserstoffperoxid, besonders bevorzugt mindestens 0,003 g/L, ganz besonders bevorzugt mindestens 0,005 g/L, insbesondere in manchen Situationen mindestens 0,01 g/L, mindestens 0,05 g/L, mindestens 0,1 g/L, mindestens 0,15 g/L oder sogar mindestens 0,2 g/L. Sie enthält bis zu 0,3 g/L Wasserstoffperoxid, insbesondere in manchen Situationen bis zu 0,1 g/L. Bei den durchgeführten Versuchen hat sich ein Gehalt an Wasserstoffperoxid zum Beispiel in der Größenordnung von 0,006 g/L, 0,0075 g/L, 0,009 g/L oder 0,011 g/L besonders empfohlen. Ein statt dessen höherer Gehalt an diesem Beschleuniger hat dabei meistens keine besseren Ergebnisse gebracht. Vielmehr ist proportional zum Gehalt an Wasserstoffperoxid auch dessen Verbrauch angestiegen. Bei dem erfindungsgemäßen Verfahren gelang es, den Gehalt an diesem Beschleuniger signifikant abzusenken. Im Durchsatzversuch konnte der Wasserstoffperoxid-Gehalt auch über mehrere Tage im Bereich von 0,01 bis 0,4 oder sogar im Bereich von 0,02 bis 0,3 g/L trotz diskontinuierlicher Zugabe an Wasserstoffperoxid gehalten werden.

Bei dem erfindungsgemäßen Phosphatierverfahren können die Gehalte der Phosphatierungslösung an Mangan 0,1 bis 10 g/L oder/und an Nickel 0,01 bis 1,8 g/L betragen.

Es ist besonders bevorzugt, dass die Phosphatierungslösung mindestens 0,2 g/L Mangan enthält, besonders bevorzugt mindestens 0,3 g/L, ganz besonders bevorzugt mindestens 0,4 g/L, insbesondere in manchen Situationen mindestens 0,8 g/L, mindestens 1,5 g/L, mindestens 3 g/L oder sogar mindestens 6 g/L. Sie enthält vorzugsweise bis zu 8 g/L Mangan, besonders bevorzugt bis zu 6 g/L, ganz besonders bevorzugt bis zu 4 g/L, insbesondere in manchen Situationen bis zu 2,5 g/L, vor allem bis zu 1,5 g/L oder bis zu 1 g/L. Es ist meistens vorteilhaft, Mangan zuzusetzen.

Das Verhältnis von Zink zu Mangan kann in weiten Bereichen variiert werden. Es kann vorzugsweise auch im Verhältnis von Zink zu Mangan im Bereich von 1 : 20 bis 1 : 0,05 gehalten werden, besonders bevorzugt im Bereich von 1 : 10 bis 1 : 0,1, ganz besonders bevorzugt im Bereich von 1 : 4 bis 1 : 0,2.

Ein Gehalt an Nickel im Phosphatierbad kann insbesondere bei der Kontaktierung von Zink-haltigen Oberflächen vorteilhaft sein. Dagegen ist ein Nikkelgehalt des Phosphatierbad bei Aluminium- oder/und Eisen-reichen Oberflächen üblicherweise nicht erforderlich. Es ist besonders bevorzugt, dass die Phosphatierungslösung mindestens 0,02 g/L Nickel enthält, besonders bevorzugt mindestens 0,04 g/L, ganz besonders bevorzugt mindestens 0,08 g/L oder mindestens 0,15 g/L, insbesondere in manchen Situationen mindestens 0,2 g/L, mindestens 0,5 g/L, mindestens 1 g/L oder sogar mindestens 1,5 g/L. Sie enthält vorzugsweise bis zu 1,8 g/L Nickel, besonders bevorzugt bis zu 1,6 g/L, ganz besonders bevorzugt bis zu 1,3 g/L, insbesondere in manchen Situationen bis zu 1 g/L, vor allem bis zu 0,75 g/L oder bis zu 0,5 g/L.

Bei dem erfindungsgemäßen Phosphatierverfahren können - in den meisten Fällen - die Gehalte der Phosphatierungslösung an Fe²⁺ 0,005 bis 1 g/L oder/und an komplexiertem Fe³⁺ 0,005 bis 0,5 g/L betragen.

In vielen Fällen wird die erfindungsgemäße Zusammensetzung aufgrund des Gehalts an Wasserstoffperoxid nicht mehr als 0,2 g/L Fe²⁺ aufweisen und daher z.B. 0,01, 0,03, 0,05, 0,08, 0,1, 0,14 oder 0,18 g/L enthalten. Die Phosphatierungslösung kann daneben u.U. mindestens 0,01 g/L komplexiertes Fe³⁺ enthalten, besonders bevorzugt mindestens 0,02 g/L, ganz besonders bevorzugt mindestens 0,03 g/L oder mindestens 0,05 g/L, insbesondere in manchen Situationen mindestens 0,08 g/L oder sogar mindestens 0,1 g/L. Sie enthält vorzugsweise bis zu 0,3 g/L komplexiertes Fe³⁺, besonders bevorzugt bis zu 0,1 g/L, ganz besonders bevorzugt bis zu 0,06 g/L, insbesondere in manchen Situationen bis zu 0,04 g/L. Oft sind nennenswerte Gehalte an gelöstem Fe nur dann in der Phosphatierungslösung enthalten, wenn Eisenwerkstoffe kontaktiert werden oder wurden. Dennoch kann es vorteilhaft sein, gelöstes Fe³⁺ bei der Phosphatierung insbesondere von Nichteisenwerkstoffen der wässerigen Zusammensetzung zuzusetzen, weil dann ein Schlamm von besserer Konsistenz gebildet wird, der lockerer und leichter abspülbarer ist. Außerdem ist Fe²⁺ ein gutes Beizmittel. Üblicherweise wird bei dem erfindungsgemäßen Verfahren nicht auf der Eisenseite gearbeitet, weil die Fe-Gehalte hierfür nicht hoch genug sind.

Bei dem erfindungsgemäßen Phosphatierverfahren können die Gehalte der Phosphatierungslösung an Natrium 0,04 bis 20 g/L, an Kalium 0,025 bis 35 g/L oder/und an Ammonium 0,01 bis 50 g/L betragen, wobei die Summe an Natrium, Kalium und Ammonium 0,025 bis 70 g/L beträgt.

Es ist besonders bevorzugt, dass die Phosphatierungslösung mindestens 0,05 g/L Natrium enthält, besonders bevorzugt mindestens 0,07 g/L, ganz besonders bevorzugt mindestens 0,1 g/L oder mindestens 0,15 g/L, insbesondere in manchen Situationen mindestens 0,3 g/L, mindestens 0,5 g/L, mindestens 1 g/L, mindestens 2 g/L oder sogar mindestens 4 g/L. Sie enthält vorzugsweise bis zu 15 g/L Natrium, besonders bevorzugt bis zu 10 g/L, ganz besonders bevorzugt bis zu 6 g/L, insbesondere in manchen Situationen bis zu 4 g/L, vor allem bis zu 3 g/L oder bis zu 2 g/L.

Es ist besonders bevorzugt, dass die Phosphatierungslösung mindestens 0,05 g/L Kalium enthält, besonders bevorzugt mindestens 0,07 g/L, ganz besonders bevorzugt mindestens 0,1 g/L oder mindestens 0,15 g/L, insbesondere in manchen Situationen mindestens 0,3 g/L, mindestens 0,5 g/L, mindestens 1 g/L, mindestens 2 g/L oder sogar mindestens 4 g/L. Sie enthält vorzugsweise bis zu 25 g/L Kalium, besonders bevorzugt bis zu 15 g/L, ganz besonders bevorzugt bis zu 8 g/L, insbesondere in manchen Situationen bis zu 5 g/L, vor allem bis zu 3 g/L oder bis zu 2 g/L.

Es ist besonders bevorzugt, dass die Phosphatierungslösung mindestens 0,03 g/L Ammonium enthält, besonders bevorzugt mindestens 0,06 g/L, ganz besonders bevorzugt mindestens 0,1 g/L oder mindestens 0,15 g/L, insbesondere in manchen Situationen mindestens 0,3 g/L, mindestens 0,5 g/L, mindestens 1 g/L, mindestens 2 g/L oder sogar mindestens 4 g/L. Sie enthält vorzugsweise bis zu 35 g/L Ammonium, besonders bevorzugt bis zu 20 g/L, ganz besonders bevorzugt bis zu 10 g/L, insbesondere in manchen Situationen bis zu 6 g/L, vor allem bis zu 3 g/L oder bis zu 2 g/L.

Es ist besonders bevorzugt, dass die Phosphatierungslösung einen Gesamtgehalt an Natrium, Kalium und Ammonium von mindestens 0,05 g/L enthält, besonders bevorzugt von mindestens 0,1 g/L, ganz besonders bevorzugt mindestens 0,2 g/L oder mindestens 0,3 g/L, insbesondere in manchen Situationen mindestens 0,5 g/L, mindestens 1 g/L, mindestens 2 g/L, mindestens 4 g/L oder sogar mindestens 8 g/L. Sie enthält einen Gesamtgehalt an Natrium, Kalium und Ammonium vorzugsweise von bis zu 65 g/L, besonders bevorzugt bis zu 35 g/L, ganz besonders bevorzugt bis zu 20 g/L, insbesondere in manchen Situationen bis zu 10 g/L, vor allem bis zu 6 g/L oder bis zu 3 g/L. Vorteilhafterweise wird der erfindungsgemäßen wässerigen Zusammensetzung Natrium, Kalium oder/und Ammonium zugesetzt, wenn erhöhte Aluminiumgehalte in der Zusammensetzung auftreten. Ein Zusatz von Natrium oder/und Kalium ist aus Gründen der Umweltverträglichkeit im Vergleich zu Ammonium bevorzugt.

Bei dem erfindungsgemäßen Phosphatierverfahren können die Gehalte der Phosphatierungslösung an Nitrat vorzugsweise 0,1 bis 30 g/L, an Chlorid vorzugsweise 0,01 bis 0,5 g/L oder/und an Sulfat vorzugsweise 0,005 bis 5 g/L betragen.

Einerseits kann das erfindungsgemäße Phosphatierungsverfahren weitgehend oder gänzlich frei von Nitrat betrieben werden. Andererseits kann es besonders bevorzugt sein, dass die Phosphatierungslösung mindestens 0,3 g/L Nitrat enthält, besonders bevorzugt mindestens 0,6 g/L, ganz besonders bevorzugt mindestens 1 g/L oder mindestens 1,5 g/L, insbesondere in manchen Situationen mindestens 2 g/L, mindestens 3 g/L, mindestens 4 g/L, mindestens 6 g/L oder sogar mindestens 8 g/L. Sie enthält vorzugsweise bis zu 22 g/L Nitrat, besonders bevorzugt bis zu 15 g/L, ganz besonders bevorzugt bis zu 10 g/L, insbesondere in manchen Situationen bis zu 8 g/L, vor allem bis zu 6 g/L oder bis zu 4 g/L.

Es kann in manchen Situationen besonders bevorzugt sein, dass die Phosphatierungslösung mindestens 0,03 g/L Chlorid enthält, besonders bevorzugt mindestens 0,05 g/L, ganz besonders bevorzugt mindestens 0,08 g/L oder mindestens 0,12 g/L, insbesondere in manchen Situationen mindestens 0,15 g/L, mindestens 0,2 g/L oder sogar mindestens 0,25 g/L. Sie enthält vorzugsweise bis zu 0,35 g/L Chlorid, besonders bevorzugt bis zu 0,25 g/L, ganz besonders bevorzugt bis zu 0,2 g/L, insbesondere in manchen Situationen bis zu 0,15 g/L, vor allem bis zu 0,1 g/L oder bis zu 0,08 g/L.

Es ist besonders bevorzugt, dass die Phosphatierungslösung mindestens 0,01 g/L Sulfat enthält, besonders bevorzugt mindestens 0,05 g/L, ganz besonders bevorzugt mindestens 0,1 g/L oder mindestens 0,15 g/L, insbesondere in manchen Situationen mindestens 0,3 g/L, mindestens 0,5 g/L, mindestens 0,7 g/L oder sogar mindestens 1 g/L. Sie enthält vorzugsweise bis zu 3,5 g/L Sulfat, besonders bevorzugt bis zu 2 g/L, ganz besonders bevorzugt bis zu 1,5 g/L, insbesondere in manchen Situationen bis zu 1 g/L oder bis zu 0,5-g/L.

Ein Zusatz von Nitrat kann hierbei vorteilhaft sein, um auch Aluminium-reiche Oberflächen schichtbildend, das heißt mit einer nicht zu dünnen Phosphatschicht, zu phosphatieren. Auch der Zusatz z.B. von Natrium, Eisen, Mangan, Nickel oder/und Zink erfolgt vorzugsweise zumindest teilweise über Nitrate wegen ihrer guten Wasserlöslichkeit. Andererseits ist es bevorzugt, dem Phosphatierbad kein Chlorid oder/und kein Sulfat zuzusetzen. Gewisse Gehalte an Chlorid oder/und Sulfat sind oft bereits im Wasser vorhanden und können leicht aus anderen Verfahrensabschnitten eingeschleppt werden.

Bei dem erfindungsgemäßen Phosphatierverfahren können die Gehalte der Phosphatierungslösung an gelöstem Aluminium einschließlich komplexiertem Aluminium vorzugsweise 0,002 bis 1 g/L betragen.

Da in vielen Fällen ein Gehalt an gelöstem Aluminium als Badgift wirkt, wird es in diesen Situationen bevorzugt sein, dass insbesondere im Tauchen nicht mehr als 0,03 g/L an gelöstem Aluminium in der Phosphatierungslösung vorhanden sind, wobei jedoch bei manchen Verfahren wie z.B. im Spritzen bis 0,1 g/L Aluminium gelöst sein können und in no-rinse-Verfahren wie z.B. beim Aufwalzen sogar bis zu etwa 1 g/L Aluminium gelöst sein können. Daher ist es oft vorteilhaft, wenn nicht mehr als 0,8 g/L, 0,5 g/L, 0,3 g/L, 0,1 g/L, 0,08 g/L, 0,06 g/L oder nicht mehr als 0,04 g/L Aluminium in der Phosphatierungslösung auftreten. Besonders bevorzugt ist es, wenn die Gehalte an gelöstem Aluminium nahezu Null oder Null sind oder nur geringe Gehalte ausmachen. Es ist auch besonders bevorzugt, kein Aluminium absichtlich zuzusetzen. Beim Phosphatieren von Aluminium- oder Aluminiumenthaltenden metallischen Oberflächen wird jedoch aufgrund des Beizeffekts ein gewisser Aluminiumgehalt im Phosphatierbad kaum vermeidbar sein. Der Gehalt an gelöstem Aluminium wird jedoch vorteilhafterweise durch Zusatz z.B. von mindestens einer Alkali-Verbindung oder/und Ammonium sowie von einfachem Fluorid wie z.B. durch Flußsäure oder/und Ammoniumhydrogenfluorid begrenzt. Insbesondere ist es bevorzugt, hierbei Kryolith Na₃AlF₆ und verwandte Aluminium-reiche Fluor-Verbindungen wie z.B. Elpasolith, K₂NaAlF₆, auszufällen, da sie eine sehr geringe Löslichkeit in Wasser aufweisen. Bereits etwas erhöhte Gehalte an gelöstem Aluminium können sich insbesondere auf Stahloberflächen störend auswirken z.B. durch Verhinderung der Schichtausbildung und sollten daher vermieden werden. Alternativ können auch Gemische von mindestens einem weiteren lon ausgewählt aus mindestens einer weiteren Art Alkalimetallionen oder/und Ammoniumionen neben Natriumionen gut eingesetzt werden.

Magnesium ist in der Phosphatierungslösung vorzugsweise mit einem Gehalt von nicht mehr als 1 g/L oder nicht mehr als 0,5 g/L enthalten, besonders bevorzugt von nicht mehr als 0,15 g/L. Vorzugsweise wird bei Fluoridhaltigen Phosphatiersystemen kein Kalzium zugesetzt.

Bei dem erfindungsgemäßen Phosphatierverfahren können die Gehalte der Phosphatierungslösung an Kupfer 0,002 bis 0,05 g/L betragen. Vorzugsweise beträgt der Kupfergehalt der Phosphatierungslösung nicht mehr als 0,03 g/L, besonders bevorzugt nicht mehr als 0,015 g/L, insbesondere nicht mehr als 0,01 g/L. Vorzugsweise wird Kupfer jedoch nur zugesetzt, wenn geringe oder keine Gehalte an Nickel in der Phosphatierungslösung sind. Besonders bevorzugt wird jedoch kein Kupfer absichtlich zugesetzt. Kupfergehalte können in einzelnen Situationen insbesondere bei Eisenwerkstoffen vorteilhaft sein. Ein Teil oder der gesamte Gehalt an Kobalt bzw. Kupfer kann jedoch auch aus Verunreinigungen, Verschleppungen bzw. durch Anbeizen der metallischen Oberflächen von Aggregaten bzw. Rohrleitungen stammen. Auch die Gehalte an Kobalt liegen bevorzugt unter 0,05 g/L. Besonders bevorzugt ist es, kein Kobalt zuzusetzen.

Bei dem erfindungsgemäßen Phosphatierverfahren können die Gehalte der Phosphatierungslösung an freiem Fluorid vorzugsweise 0,005 bis 1 g/L oder/und an Gesamtfluorid vorzugsweise 0,005 bis 6 g/L betragen. Freies Fluorid tritt in der Badlösung als F⁻ auf, während Gesamtfluorid zusätzlich auch Gehalte an HF und allen Komplexfluoriden umfassen kann.

Es ist besonders bevorzugt, dass die Phosphatierungslösung mindestens 0,01 g/L freies Fluorid enthält, besonders bevorzugt mindestens 0,05 g/L, ganz besonders bevorzugt mindestens 0,01 g/L oder mindestens 0,03 g/L, insbesondere in manchen Situationen mindestens 0,05 g/L, mindestens 0,08 g/L, mindestens 0,1 g/L, mindestens 0,14 g/L oder sogar mindestens 0,18 g/L. Sie enthält vorzugsweise bis zu 0,8 g/L freies Fluorid, besonders bevorzugt bis zu 0,6 g/L, ganz besonders bevorzugt bis zu 0,4 g/L, insbesondere in manchen Situationen bis zu 0,3 g/L oder bis zu 0,25 g/L.

Es ist besonders bevorzugt, dass die Phosphatierungslösung mindestens 0,01 g/L Gesamtfluorid enthält, besonders bevorzugt mindestens 0,1 g/L, ganz besonders bevorzugt mindestens 0,3 g/L oder mindestens 0,6 g/L, insbesondere in manchen Situationen mindestens 0,9 g/L, mindestens 0,5 g/L, mindestens 0,8 g/L, mindestens 1 g/L oder sogar mindestens 1,2 g/L. Sie enthält vorzugsweise bis zu 5 g/L Gesamtfluorid, besonders bevorzugt bis zu 4 g/L, ganz besonders bevorzugt bis zu 3 g/L, insbesondere in manchen Situationen bis zu 2,5 g/L oder bis zu 2 g/L.

Bei dem erfindungsgemäßen Phosphatierverfahren können die Gehalte der Phosphatierungslösung an Komplexfluorid insgesamt 0,005 bis 5 g/L - insbesondere MeF₄ oder/und MeF₆, wobei zu berücksichtigen ist, dass x bei MeFₓ grundsätzlich alle Werte zwischen 1 und 6 annehmen kann, berechnet als MeF₆ - von Me = B, Si, Ti, Hf oder/und Zr betragen. Komplexfluoride von Ti, Hf und Zr können bei höheren Gehalten als Badgifte wirken, da sie die Oberfläche vorzeitig passivieren können. Daher ist es bevorzugt, dass die Summe der Komplexfluoride von Ti, Hf und Zr nicht mehr als 0,8 g/L, besonders bevorzugt nicht mehr als 0,5 g/L, ganz besonders bevorzugt nicht mehr als 0,3 g/L, insbesondere nicht mehr als 0,15 g/L beträgt. Daher ist es bevorzugt, wenn nur Komplexfluoride von B oder/und Si in größerer Menge im Phosphatierbad vorhanden sind. Teilweise sind nur Komplexfluoride von B oder Si in größerer Menge im Phosphatierbad vorhanden, wobei es vorteilhaft sein kann, beide nebeneinander zu verwenden, weil sie sich geringfügig unterschiedlich verhalten. Der Zusatz von Komplexfluorid ist insbesondere bei der Beschichtung von Zink-haltigen Oberflächen vorteilhaft, weil die Neigung zur Ausbildung von Stippen (störenden weißen Flecken) damit erfolgreich unterdrückt werden kann, insbesondere wenn mindestens 0,5 g/L Komplexfluorid zugesetzt sind. Zur Verhinderung von Stippen ist insbesondere ein Zusatz von Silicofluorid förderlich. Komplexfluoride von Bor und Silicium haben darüber hinaus den Vorteil, dass sie eine Pufferwirkung im Verhältnis zu freiem Fluorid entfalten, so dass es mit geeignetem Gehalt an derartigen Komplexfluoriden möglich ist, eine kurzzeitige Erhöhung des Anteils Aluminium-haltiger Gegenstände wie z.B. einer Aluminium-reichen Karosserie zwischen verzinkten Karosserien durch verstärkte Ausbildung von freiem Fluorid aufzufangen, ohne dass das Bad auf diesen geänderten Verbrauch im Einzelfall angepasst werden muß.

Bei dem erfindungsgemäßen Phosphatierverfahren können die Gehalte der Phosphatierungslösung an Silicofluorid, berechnet als SiF₆, 0,005 bis 4,5 g/L oder/und an Borfluorid berechnet als BF₄, 0,005 bis 4,5 g/L betragen. Es ist bevorzugt, dass die Gehalte der Phosphatierungslösung an Komplexfluorid von B und Si insgesamt, soweit Komplexfluorid zugesetzt wird, im Bereich von 0,005 bis 5 g/L liegen, besonders bevorzugt im Bereich von 0,1 bis 4,5 g/L, ganz besonders bevorzugt im Bereich von 0,2 bis 4 g/L, insbesondere im Bereich von 0,3 bis 3,5 g/L. Ein Gesamtgehalt an derartigen Komplexfluoriden kann dann beispielsweise bei 0,5, 0,8, 1,0, 1,2, 1,4, 1,6, 1,8, 2,0, 2,4, 2,8 oder 3,2 g/L liegen.

Soweit Komplexfluorid zugesetzt wird, ist es besonders bevorzugt, dass die Phosphatierungslösung mindestens 0,01 g/L Silicofluorid enthält, besonders bevorzugt mindestens 0,1 g/L, ganz besonders bevorzugt mindestens 0,2 g/L oder mindestens 0,3 g/L, insbesondere in manchen Situationen mindestens 0,4 g/L, mindestens 0,6 g/L, mindestens 0,8 g/L, mindestens 1 g/L oder sogar mindestens 1,2 g/L. Sie enthält vorzugsweise bis zu 4 g/L Silicofluorid, besonders bevorzugt bis zu 3 g/L, ganz besonders bevorzugt bis zu 2,5 g/L, insbesondere in manchen Situationen bis zu 2,2 g/L oder bis zu 2 g/L, soweit Komplexfluorid zugesetzt wird.

Soweit Komplexfluorid zugesetzt wird, ist es besonders bevorzugt, dass die Phosphatierungslösung mindestens 0,01 g/L Borfluorid enthält, besonders bevorzugt mindestens 0,1 g/L, ganz besonders bevorzugt mindestens 0,2 g/L oder mindestens 0,3 g/L, insbesondere in manchen Situationen mindestens 0,4 g/L, mindestens 0,6 g/L, mindestens 0,8 g/L, mindestens 1 g/L oder sogar mindestens 1,2 g/L. Sie enthält vorzugsweise bis zu 4 g/L Borfluorid, besonders bevorzugt bis zu 3 g/L, ganz besonders bevorzugt bis zu 2,5 g/L, insbesondere in manchen Situationen bis zu 2,2 g/L oder bis zu 2 g/L, soweit Komplexfluorid zugesetzt wird.

Bei dem erfindungsgemäßen Phosphatierverfahren können die Gehalte der Phosphatierungslösung an Titan 0,01 bis 2 g/L oder/und an Zirkonium 0,01 bis 2 g/L betragen. Besonders bevorzugt betragen die Gehalte der Phosphatierungslösung an Titan nicht mehr als 1,5 g/L, ganz besonders bevorzugt nicht mehr als 1 g/L, vor allem nicht mehr als 0,5 g/L, nicht mehr als 0,3 g/L oder sogar nicht mehr als 0,1 g/L. Besonders bevorzugt betragen die Gehalte der Phosphatierungslösung an Zirkonium nicht mehr als 1,5 g/L, ganz besonders bevorzugt nicht mehr als 1 g/L, vor allem nicht mehr als 0,5 g/L, nicht mehr als 0,3 g/L oder sogar nicht mehr als 0,1 g/L. Gehalte an Titan oder/und Zirkonium können insbesondere bei Einsatz z.B. einer Titanhaltigen Aktivierung bzw. einer Zirkonium-haltigen Nachspüllösung über die Flüssigkeiten bzw. Gehänge und andere Vorrichtungen eingeschleppt werden.

Die erfindungsgemäßen Phosphatierungslösungen sind hierbei vorzugsweise weitgehend frei oder frei von Beizinhibitoren wie z.B. Di-n-Butyl-Thioharnstoff, weitgehend frei oder frei von Schmierstoffen oder/und zeigen einen Gesamt-Tensidgehalt von weniger als 1 g/L, da diese Stoffe die Ausbildung der Phosphatschicht beeinträchtigen können bzw. Schaum erzeugen können. Sie sind in vielen Fällen weitgehend frei oder frei von Kationen wie z.B. Antimon, Arsen, Cadmium, Chrom oder/und Zinn. Es kann zwar Sonderfälle geben, in denen sich ein Zusatz von organischen Polymeren-vorteilhaft anbietet, dennoch werden die erfindungsgemäßen Phosphatierungslösungen üblicherweise keinen Gehalt an organischen Polymeren von mehr als 0,8 g/L einschließlich von eingeschleppten Gehalten an Tensid(en) oder/und Öl(en) aufweisen.

Bei dem erfindungsgemäßen Phosphatierverfahren kann die Phosphatierungslösung einen Gehalt an mindestens einer wasserlöslichen oder/und wasserdispergierbaren organischen polymeren Verbindung wie z.B. mindestens einen Polyelektrolyt oder/und mindestens einen Polyether wie beispielsweise mindestens ein Polysaccharid aufweisen. Diese Polymere können helfen, den Schlamm noch etwas weicher und leichter entfernbar zu gestalten. Ihr Gehalt beträgt vorzugsweise 0,001 bis 0,5 g/L, insbesondere 0,003 bis 0,2 g/L. Durch den Einsatz der erfindungsgemäßen Beschleuniger-Kombination wird zwar die Schlamm-Menge üblicherweise nicht verringert, aber die Schlammkonsistenz und ihre Entfernbarkeit deutlich verbessert im Vergleich zu Phosphatiersystemen mit nur einem der Beschleuniger Nitroguanidin bzw. Wasserstoffperoxid. Außerdem verläuft das Phosphatieren bei dem erfindungsgemäßen Verfahren schneller als nur mit Wasserstoffperoxid-Beschleunigung.

Bei dem erfindungsgemäßen Verfahren ist die Konsistenz des insbesondere im Phosphatierbad gefällten Schlamms günstiger als bei Verwendung allein von dem Beschleuniger Wasserstoffperoxid in der Phosphatierungslösung. Durch die Verwendung der Beschleuniger-Kombination Guanidin-Verbindung(en) - Wasserstoffperoxid bilden sich kleinere Phosphatkristalle als nur mit Wasserstoffperoxid aus, so dass die durchschnittliche Kantenlänge der Phosphatkristalle meistens kleiner 10 µm ist. Die Kristalle liegen in einem lockeren Haufwerk feiner Kriställchen vor und lassen sich daher leicht aus dem Badbehälter und den Leitungen entfernen. Offensichtlich wirkt sich hierbei außerdem ein Passivierungseffekt der Guanidin-Verbindung(en) positiv aus. Der Schlamm hatte bei den durchgeführten Versuchen etwa die gleiche Konsistenz wie bei der Kombination Guanidin-Verbindung(en) - Wasserstoffperoxid - Nitrat/Nitrit.

Bei dem erfindungsgemäßen Phosphatierverfahren kann die Phosphatierungslösung
- 0,1 bis 10 g/L Zink,
- gegebenenfalls 0,1 bis 10 g/L Mangan,
- gegebenenfalls 0,01 bis 1,8 g/L Nickel,
- 0,025 bis 70 g/L Natrium, Kalium und Ammonium zusammen,
- gegebenenfalls 0,01 bis 2 g/L Titan oder/und 0,01 bis 2 g/L Zirkonium,
- 4 bis 50 g/L Phosphat, berechnet als PO₄,
- 0,005 bis 1 g/L freies Fluorid,
- 0,005 bis 6 g/L Gesamtfluorid,
- gegebenenfalls 0,005 bis 5 g/L der Summe der Komplexfluoride von B, Si, Ti, Hf oder/und Zr,
- gegebenenfalls 0,005 bis 4,5 g/L Silicofluorid oder/und 0,005 bis 4,5 g/L Borfluorid,
- 0,03 bis 1,5 g/L an mindestens einer Guanidin-Verbindung, die mindestens eine Nitrogruppe aufweist, berechnet als Nitroguanidin,
- 0,001 bis 0,3 g/L Wasserstoffperoxid,
- 0,1 bis 30 g/L Nitrat,
- gegebenenfalls 0,01 bis 0,5 g/L Chlorid,
- gegebenenfalls 0,005 bis 5 g/L Sulfat und
- gegebenenfalls 0,001 bis 0,5 g/L an mindestens einer wasserlöslichen oder/und wasserdispergierbaren organischen polymeren Verbindung
enthalten.

Bei dem erfindungsgemäßen Phosphatierverfahren kann die Phosphatierungslösung
- 0,2 bis 6 g/L Zink,
- gegebenenfalls 0,1 bis 5 g/L Mangan,
- gegebenenfalls 0,01 bis 1,6-g/L-Nickel,
- 0,025 bis 40 g/L Natrium, Kalium und Ammonium zusammen,
- gegebenenfalls 0,01 bis 2 g/L Titan oder/und 0,01 bis 2 g/L Zirkonium,
- 5 bis 45 g/L. Phosphat, berechnet als PO₄,
- 0,005 bis 1 g/L freies Fluorid,
- 0,005 bis 5 g/L Gesamtfluorid,
- gegebenenfalls 0,005 bis 4 g/L der Summe der Komplexfluoride von B, Si, Ti, Hf oder/und Zr,
- gegebenenfalls 0,005 bis 3,6 g/L Silicofluorid oder/und 0,005 bis 3,6 g/L Borfluorid,
- 0,03 bis 1,5 g/L an mindestens einer Guanidin-Verbindung, die mindestens eine Nitrogruppe aufweist, berechnet als Nitroguanidin,
- 0,001 bis 0,3 g/L Wasserstoffperoxid,
- 0,1 bis 20 g/L Nitrat,
- gegebenenfalls 0,01 bis 0,5 g/L Chlorid,
- gegebenenfalls 0,005 bis 3 g/L Sulfat und
- gegebenenfalls 0,002 bis 0,4 g/L an mindestens einer wasserlöslichen oder/und wasserdispergierbaren organischen polymeren Verbindung
enthalten.

Zur Bestimmung der Freien Säure werden 10 ml der Phosphatierungslösung ohne Verdünnung zwecks Dissoziationsverschiebung des Komplexfluorids bis zur Sättigung mit KCl versetzt und unter Verwendung von Dimethylgelb als Indikator mit 0,1 M NaOH bis zum Umschlag von rot nach gelb titriert. Die verbrauchte Menge an 0,1 M NaOH in ml ergibt den Wert der Freien Säure (FS-KCl) in Punkten. Wenn jedoch in der Phosphatierungslösung kein Komplexfluorid-enthalten ist, wird die Freie Säure in 100 ml voll entsalztem Wasser gegen Dimethylgelb als Indikator mit NaOH von rot nach gelb titriert. Die verbrauchte Menge an 0,1 M NaOH in ml ergibt den Wert der Freien Säure (FS) in Punkten.

Zur Bestimmung des Gesamtgehalts an Phosphationen werden 10 ml der Phosphatierungslösung mit 200 ml vollentsalztem Wasser verdünnt und unter Verwendung von Bromkresolgrün als Indikator mit 0,1 M NaOH bis zum Umschlag von Gelb nach Türkies titriert. Im Anschluss an diese Titration wird nach Zugabe von 20 ml 30 %-iger neutraler Kaliumoxalatlösung gegen Phenolphthalein als Indikator bis zum Umschlag von Blau nach Violett mit 0,1 M NaOH titriert. Der Verbrauch an 0,1 M NaOH in ml zwischen dem Umschlag mit Bromkresolgrün und dem Umschlag mit Phenolphthalein entspricht der Gesamtsäure nach Fischer (GSF) in Punkten. Wenn dieser Wert mit 0,71 multipliziert wird, ergibt sich der Gesamtgehalt an Phosphationen in P₂O₅ bzw. multipliziert mit 0,969 für PO₄ (Siehe W. Rausch: "Die Phosphatierung von Metallen". Eugen G. Leuze-Verlag 1988, pp. 300 ff).

Der sogenannte S-Wert ergibt sich durch Division des Wertes der Freien Säure KCl - bzw. ohne Anwesenheit von Komplexfluorid in der Phosphatierungslösung - der Freien Säure durch den Wert der Gesamtsäure nach Fischer.

Die Gesamtsäure verdünnt (GS_{verdünnt}) ist die Summe aus den enthaltenen zweiwertigen Kationen sowie freien und gebundenen Phosphorsäuren (letztere sind Phosphate). Sie wird durch den Verbrauch an 0,1 molarer Natronlauge unter Verwendung des Indikators Phenolphthalein an 10 ml Phosphatierungslösung verdünnt mit 200 ml vollentsalztem Wasser bestimmt. Dieser Verbrauch an 0,1 M NaOH in ml entspricht der Punktzahl der Gesamtsäure.

Bei dem erfindungsgemäßen Verfahren kann der Gehalt an Freier Säure KCl - bzw. ohne Anwesenheit von Komplexfluorid in der Phosphatierungslösung der Freien Säure - vorzugsweise im Bereich von 0,3 bis 6 Punkten, der Gehalt an Gesamtsäure verdünnt vorzugsweise im Bereich von 8 bis 70 Punkten oder/und der Gehalt an Gesamtsäure Fischer vorzugsweise im Bereich von 4 bis 50 Punkten liegen. Vorzugsweise liegt der Bereich der Freien Säure KCI bei 0,4 bis 5,5 Punkten, insbesondere bei 0,6 bis 5 Punkten. Vorzugsweise liegt der Bereich der Gesamtsäure verdünnt bei 12 bis 50 Punkten, insbesondere bei 18 bis 44 Punkten. Vorzugsweise liegt der Bereich der Gesamtsäure Fischer bei 7 bis 42 Punkten, insbesondere bei 10 bis 30 Punkten. Der S-Wert als Verhältnis der Zahl der Punkte der Freien Säure KCl - bzw. der Freien Säure - zu denen der Gesamtsäure Fischer liegt vorzugsweise im Bereich von 0,01 bis 0,40, insbesondere im Bereich von 0,03 bis 0,35, vor allem im Bereich von 0,05 bis 0,30.

Bei dem erfindungsgemäßen Beschichtungsverfahren kann der pH-Wert der Phosphatierungslösung im Bereich von 1 bis 4 liegen, vorzugsweise im Bereich von 2,2 bis 3,6, besonders bevorzugt im Bereich von 2,8 bis 3,3.

Bei dem erfindungsgemäßen Phosphatierverfahren können die metallischen Oberflächen bei einer Temperatur im Bereich von 30 bis 75 °C phosphatiert werden, insbesondere bei 35 bis 60 °C, besonders bevorzugt bei bis zu 55 °C oder bei bis zu 50 °C oder bei bis zu 48 °C.

Bei dem erfindungsgemäßen Phosphatierverfahren können die metallischen Oberflächen - insbesondere beim Tauchen oder/und Spritzen - über eine Zeit vorzugsweise im Bereich von 0,1 bis 8 Minuten mit der Phosphatierungslösung kontaktiert werden, insbesondere über 0,2 bis 5 Minuten. Beim Aufwalzen oder/und beim Aufsprühen am Band kann die Zeit des Kontaktierens bis zu Bruchteilen einer Sekunde verringert werden.

Die erfindungsgemäße Phosphatierungslösung eignet sich für die verschiedensten metallischen Oberflächen, insbesondere aber auch für EisenWerkstoffe im Tauchen. Andererseits hat sich gezeigt, dass das erfindungsgemäße Verfahren auch besonders gut zum Phosphatieren geeignet ist für einen Mix von Gegenständen aus unterschiedlichen metallischen Materialien insbesondere ausgewählt aus Aluminium, Aluminiumlegierung(en), Stahl/Stählen, verzinktem Stahl/verzinkten Stählen und Zinklegierung(en). Dieses Verfahren ist auch für einen großen Durchsatz von Aluminium-reichen Oberflächen besonders gut geeignet.

Bei dem erfindungsgemäßen Phosphatierverfahren können die metallischen Oberflächen vor dem Phosphatieren gereinigt, gebeizt oder/und aktiviert werden, gegebenenfalls jeweils mit mindestens einem nachfolgenden Spülschritt. Vorzugsweise ist der allerletzte Spülschritt nach dem Phosphatieren und gegebenenfalls nach dem Nachspülen ein Spülgang mit voll entsalztem Wasser. Bei dem erfindungsgemäßen Phosphatierverfahren können die phosphatierten metallischen Oberflächen anschließend gespült, mit einer Nachspüllösung nachgespült, getrocknet oder/und mit jeweils mindestens einem Lack, einer Lack-artigen Beschichtung, einem Klebstoff oder/und einer Folie beschichtet werden. Die Nachspüllösung kann je nach Anforderungsprofil recht unterschiedlich zusammengesetzt sein. Die Zusammensetzungen sind grundsätzlich dem Fachmann bekannt.

Die Erfindung betrifft auch eine saure, wässerige Phosphatierungslösung im Wesentlichen bestehend aus
- 0,1 bis 10 g/L Zink,
- gegebenenfalls 0,1 bis 10 g/L Mangan,
- gegebenenfalls 0,01 bis 1,8 g/L Nickel,
- Natrium, Kalium oder/und Ammonium, wobei die Summe an Natrium, Kalium und Ammonium 0,025 bis 70 g/L beträgt,
- 4 bis 50 g/L Phosphat, berechnet als PO₄,
- mindestens 0,03 und bis zu 1,5 g/L an mindestens einer Guanidin-Verbindung, die mindestens eine Nitrogruppe aufweist, berechnet als Nitroguanidin,
- mindestens 0,001 und bis zu 0,3 g/L Wasserstoffperoxid,
- gegebenenfalls 0,1 bis 30 g/L Nitrat,
- gegebenenfalls 0,01 bis 0,5 g/L Chlorid,
- gegebenenfalls 0,005 bis 5 g/L Sulfat,
- gegebenenfalls 0,005 bis 1 g/L freies Fluorid,
- gegebenenfalls 0,005 bis 6 g/L Gesamtfluorid und
- gegebenenfalls 0,005 bis 5 g/L Komplexfluorid.

Die erfindungsgemäße saure, wässerige Lösung kann auch einen Gehalt an
- 0,005 bis 5 g/L der Summe der Komplexfluoride von B, Si, Ti, Hf oder/und Zr,
- 0,005 bis 4,5 g/L Silicofluorid,
- 0,005 bis 4,5 g/L Borfluorid,
- 0,01 bis 2 g/L Titan,
- 0,01 bis 2 g/L Zirkonium oder/und
- 0,001 bis 0,5 g/L an mindestens einer wasserlöslichen oder/und wasserdispergierbaren organischen polymeren Verbindung
aufweisen. Vorzugsweise beträgt der Nickel-Gehalt nicht mehr als 1,5 g/L.

Die erfindungsgemäße saure, wässerige Lösung kann einerseits eine Phosphatierungslösung sein, die als Phosphatierbad eingesetzt wird, andererseits gegebenenfalls auch das entsprechende Konzentrat bzw. die entsprechende Ergänzungslösung, um eine Phosphatierungslösung unter Verdünnung anzusetzen bzw. mit der Ergänzungslösung bezüglich wesentlicher Bestandteile in dem gewünschten Konzentrationsniveau zu halten.

Die Erfindung betrifft darüber hinaus auch einen metallischen Gegenstand mit einer Phosphatschicht, die nach dem erfindungsgemäßen Verfahren hergestellt wurde.

Die erfindungsgemäß beschichteten Gegenstände können beispielsweise im Fahrzeugbau, insbesondere in der Automobilserienfertigung, für die Herstellung von Komponenten oder Karosserieteilen bzw. vormontierten Elementen in der Fahrzeug- oder Luftfahrtindustrie, in der Bauindustrie, in der Möbelindustrie, für die Herstellung von Geräten und Anlagen, insbesondere Haushaltsgeräten, Messgeräten, Kontrolleinrichtungen, Prüfeinrichtungen, Konstruktionselementen, Verkleidungen sowie von Kleinteilen verwendet werden.

Es war überraschend, dass mit einer deutlich abgesenkten Konzentration an Zusätzen an mindestens einer Guanidin-Verbindung wie Nitroguanidin Ergebnisse in der gleichen Größenordnung wie mit allein mit Nitroguanidin beschleunigten Systemen erzielt wurden, aber den Verbrauch an Beschleunigern teilweise um bis zu 30 % gesenkt werden konnten und die Umweltverträglichkeit noch verbessert werden konnte, da die Gehalte an Ammonium, Guanidinverbindungen, Nitrat und Nitrit und damit die Stickstofflast des Abwassers deutlich abgesenkt werden konnten.

Bei einem nur mit Nitroguanidin und gegebenenfalls Nitrat beschleunigten Phosphatiersystem wird bei geschlossenen Schichten und guter Schichtausbildung oft ein Schichtgewicht von 2,5 bis 3,5 g/m² ermittelt, wodurch ein vergleichsweise hoher Verbrauch auftritt. Mit dem erfindungsgemäßen Verfahren ist es jedoch gelungen, Phosphatschichten auszubilden, die bei einer durchschnittlichen Kantenlänge der Phosphatkristalle in der Größenordnung von weniger als 10 µm meistens ein Schichtgewicht meistens in der Größenordnung von etwa 2 bis 2,5 g/m² aufweisen bzw. bei einer durchschnittlichen Kantenlänge der Phosphatkristalle in der Größenordnung von etwa 6 µm oft ein Schichtgewicht in der Größenordnung von etwa 1,5- bis 2 g/m² aufweisen, insbesondere auch auf Stahl. Hierbei ist die Qualität der Korrosionsbeständigkeit und der Lackhaftung nicht abgefallen. Je feinkörniger die Phosphatschicht ausgebildet wird, desto dünner kann die Phosphatschicht ausgebildet werden. Diese besonders dünne Phosphatschicht kann kostengünstiger ausgebildet werden, ist von erhöhter Lackhaftung und beim Umformen von erhöhter Flexibilität. Daher können Phosphatschichten mit einer durchschnittlichen Kantenlänge der Phosphatkristalle in der Größenordnung von etwa 5 µm bei einem Schichtgewicht in der Größenordnung von etwa 1,5 g/m² näherungsweise als Optimum angesehen werden.

Es war weiter überraschend, dass ohne Einbußen an Verfahrensqualität und Schichtqualität die Phosphatierung bei 3 bis 25 °C niedrigeren Temperaturen als üblich und deswegen kostengünstiger durchgeführt werden konnte. An Stelle der typischen Phosphatierungstemperatur im Bereich von etwa 48 bis 65 °C bei konventionellen Phosphatierungslösungen kann hier erfindungsgemäß im Bereich von 30 bis 65 °C, insbesondere im Bereich von 35 bis 55 °C, gut oder sogar sehr gut gearbeitet werden. Je niedriger die Temperatur liegt, desto geringer kann die Azidität des Bades gehalten werden, insbesondere der S-Wert als Verhältnis der Freien Säure oder der Freien Säure KCI zur Gesamtsäure Fischer.

### Beispiele und Vergleichsbeispiele:

Der Gegenstand der Erfindung wird anhand von Ausführungsbeispielen näher erläutert:

Den Beispielen liegen die im folgenden aufgeführten Substrate bzw. Verfahrensschritte zugrunde:

Die Prüfbleche bestanden aus einem-Mix-von Blechen jeweils im Verhältnis 1:1:1:1
A) aus einer Aluminiumlegierung AIMg_{0,4}Si_{1,2} entsprechend AA6016,
B) aus einem kaltgewalzten durchlaufgeglühten Stahlblech aus unlegiertem Stahl DC04B,
C) aus beidseitig elektrolytisch verzinktem Feinblech, Automobilqualität, Güte DX54 DZ100 und
D) aus feuerverzinktem nachgewalzten Blech aus weichem unlegiertem Stahl der Güte DX53 mit mindestens 100 g/m² Zinkauflage,
jeweils mit einer Dicke von ca. 0,75 mm. Die Oberfläche jedes einzelnen Bleches, von denen jeweils pro Zusammensetzung, Blechart und Versuch mindestens 3 je Bleche eingesetzt wurden, betrug 400 cm², gemessen über beide Flächen.
1. Die Substratoberflächen wurden in einer 2 %-igen wässerigen Lösung eines mildalkalischen Reinigers über 5 Minuten bei 58 bis 60 °C gereinigt und hierbei gründlich entfettet.
2. Es folgte eine Spülung mit Leitungswasser über 0,5 Minuten bei Raumtemperatur.
3. Dann wurden die Oberflächen durch Tauchen in einem titanphosphathaltigen Aktivierungsmittel über 0,5 Minuten bei Raumtemperatur aktiviert.
4. Danach wurden die Oberflächen über 3 Minuten bei 53 bzw. 45 °C durch Tauchen in die Phosphatierungslösung phosphatiert. Die Phosphatierungstemperatur war bereits in Vorversuchen ermittelt worden.
5. Anschließend wurde zuerst mit Leitungswasser gespült, dann mit einer Zirkonfluorid enthaltenden wässerigen Lösung nachgespült und schließlich mit vollentsalztem Wasser gespült.
6. Dann wurden die beschichteten Substrate im Trockenofen bei 80 °C über 10 Minuten getrocknet. In diesem Zustand wurde auch das Schichtgewicht ermittelt.
7. Schließlich wurden die trockenen Prüfbleche mit einem kathodischen Tauchlack versehen und mit den weiteren Schichten eines in der Automobilindustrie für Karossen üblichen Lackaufbaus beschichtet.

Die Zusammensetzungen der jeweiligen Phosphatierungslösungen werden in Tabelle 1 aufgeführt.

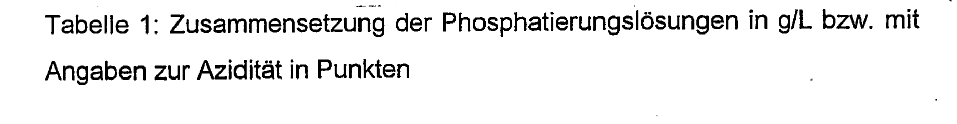

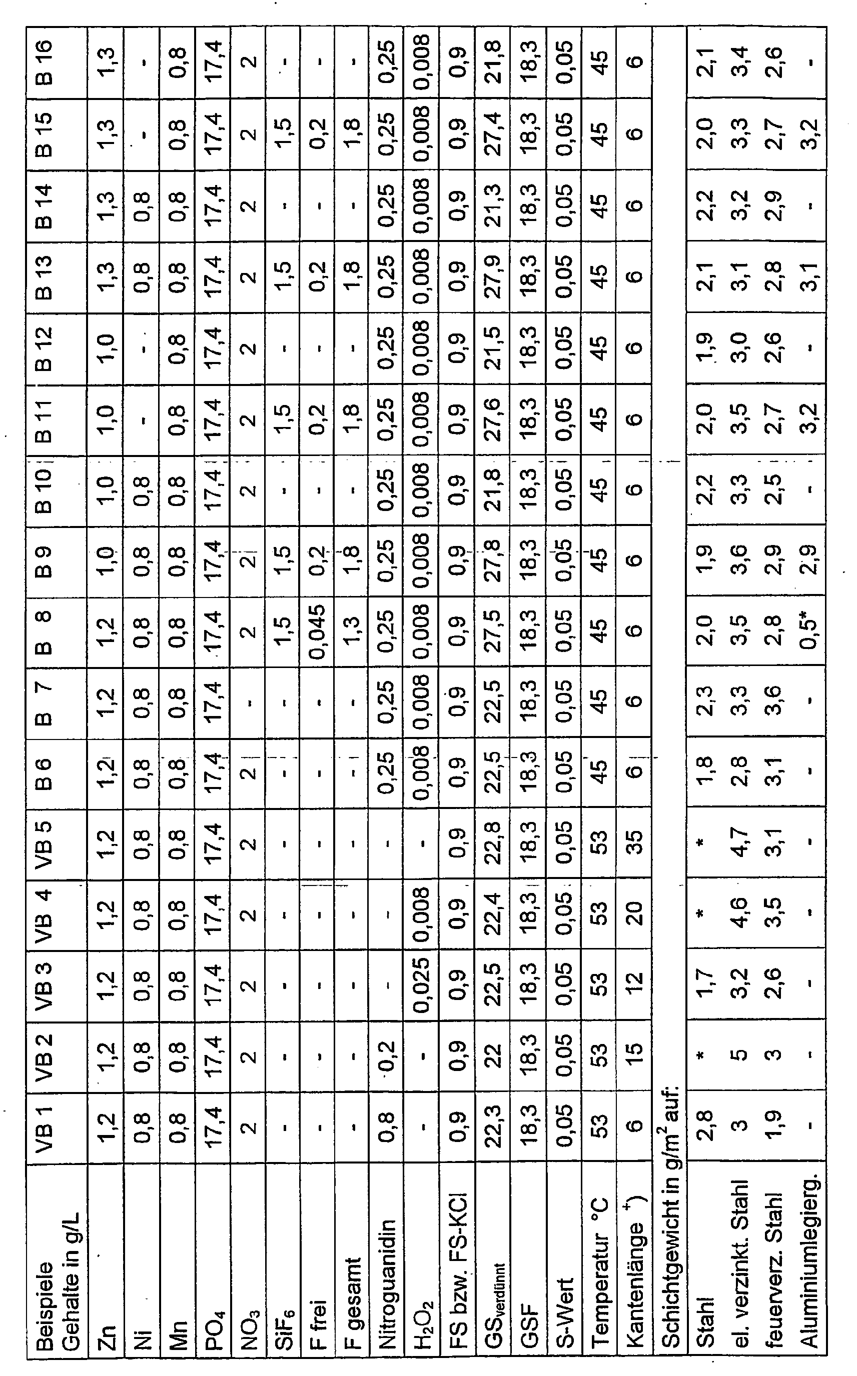

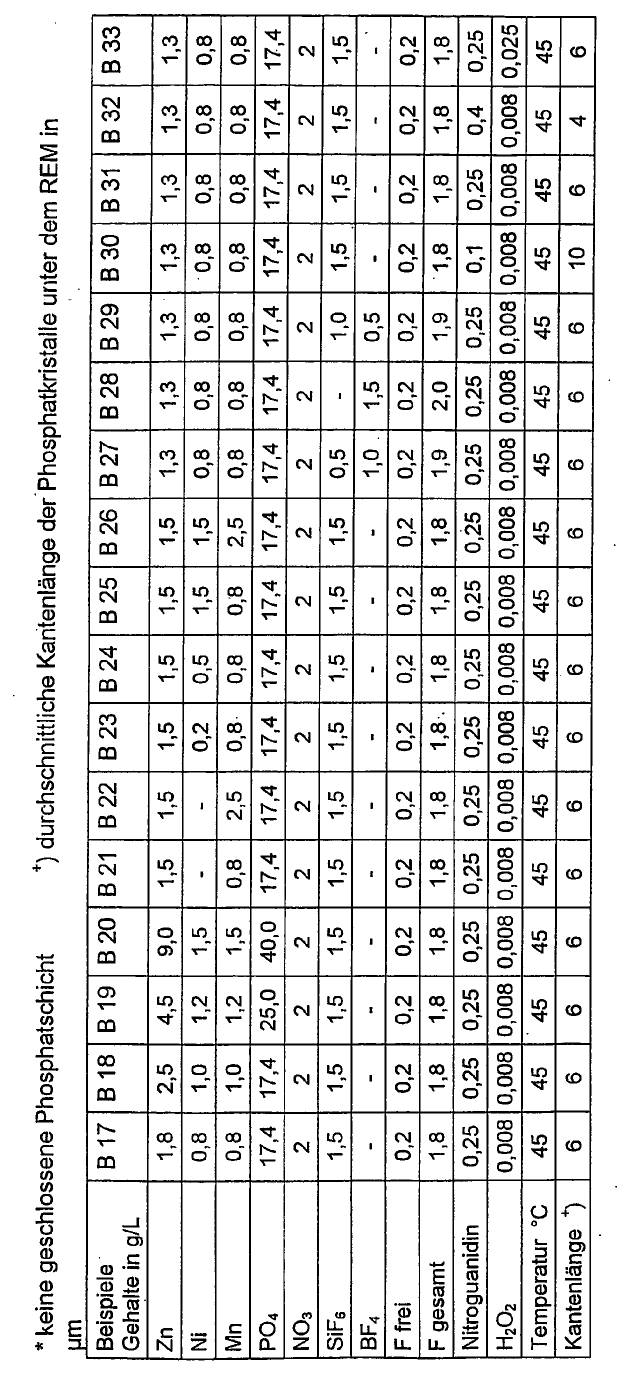

Da die Vergleichsbeispiele bzw. Beispiele 1 bis 7 weder ein Gehalt an Fluorid, noch an Komplexfluorid enthielten, konnten auf Aluminiumlegierungen keine sichtbaren Phosphatschichten abgeschieden werden. Deshalb konnte auch kein Schichtgewicht bestimmt werden. Bei allen übrigen Versuchen wurden gut geschlossene Phosphatschichten ausgebildet. Die Mindestphosphatierzeit, die nötig ist, um gerade eine geschlossene Phosphatschicht auszubilden, betrug bei den Vergleichsbeispielen VB1 2 Minuten, VB2 und VB3 2,5 bis 3 Minuten, VB4 4 bis 5 Minuten und VB5 etwa 15 Minuten auf Stahloberflächen. Sie betrug jedoch bei allen erfindungsgemäßen Beispielen in der Regel 1,5 bis 2 Minuten auf Stahloberflächen. Sie konnte daher signifikant abgesenkt werden. Dagegen liegt die Mindestphosphatierzeit bei Aluminium generell etwas niedriger und bei Zink-reichen Oberflächen deutlich niedriger. Die durchschnittliche Kantenlänge der Phosphatkristalle auf Stahloberflächen wurde näherungsweise an 20 bis 50 Kristallen an REM-Aufnahmen abgeschätzt.

Bei den Vergleichsbeispielen 1 bis 5 wurde auf Stahloberflächen nur dann eine geschlossene Phosphatschicht ausgebildet, wenn eine ausreichende Menge an Beschleuniger vorhanden war. Der Gehalt an Nitroguanidin bzw. Wasserstoffperoxid hatte nur bei den Vergleichsbeispielen 1 und 3 zur Ausbildung einer geschlossenen Phosphatschicht ausgereicht.

Bei den Vergleichsbeispielen 1 bis 5 war es jedoch auf Eisen-reichen Oberflächen wie z.B. Stahloberflächen nur möglich, eine geschlossene Phosphatschicht auszubilden, wenn eine besonders hohe Konzentration eines Beschleunigers gewählt wurde. Wenn jedoch als Beschleuniger sowohl Nitroguanidin, als auch Wasserstoffperoxid anwesend waren, dann waren bereits deutlich geringere Beschleunigergehalte, auch in Summe dieser Beschleuniger, für eine gute Schichtbildung ausreichend. Die erfindungsgemäßen Beispiele 6ff belegen, dass dann bereits nur 0,008 g/L Wasserstoffperoxid in Kombination mit 0,25 g/L Nitroguanidin für gute Ergebnisse ausreichten. Daher konnte bei dieser Beschleuniger-Kombination der Zusatz an Beschleunigern gesenkt und das Verfahren kostengünstiger geführt werden, zumal Nitroguanidin die teuerste Rohstoffkomponente der Phosphatierungslösung ist.

Die Zusätze bzw. Gehalte an Natrium, Kalium und Ammonium ergaben sich einerseits aus den Verunreinigungen insbesondere des Wassers, andererseits aus der Einstellung der Freien Säure bzw. des S-Wertes, wobei im Bedarfsfall Natronlauge oder/und Ammoniaklösung verwendet wurde. Hierbei stellten sich Gehalte an Natrium bis zu 3,6 g/L, an Kalium bis zu 0,05 g/L bzw. an Ammonium bis zu 3,0 g/L ein.

Es wurde auch kein Aluminium, kein Kalzium, kein Magnesium und kein Eisen absichtlich zugegeben. Derartige Gehalte in der Phosphatierungslösung ergaben sich aufgrund Spurenverunreinigungen des Wassers und der Zusätze sowie aufgrund des Beizeffektes auf den Blechoberflächen. Für gelöstes Aluminium in der Phosphatierungslösung ergab sich dabei je nach Probe ein Gehalt im Bereich von wenigen mg/L. Hierbei traten keine Phosphatierungsstörungen auf. Es ergab sich nur ein minimaler Gehalt der Phosphatierungslösung an gelösten Eisen-II-Ionen aufgrund der Zusammensetzung der Phosphatierungslösung, da Wasserstoffperoxid zu einer sofortigen Ausfällung des gelösten Eisens führte. Der Phosphatierungslösung wurde Nitroguanidin als Beschleuniger mit einem Gehalt im Bereich von 0,1 bis 0,5 g/L zugesetzt, Wasserstoffperoxid im Bereich von 0,005 bis 0,05 g/L. Da sich Wasserstoffperoxid schnell verbrauchte, wurde Wasserstoffperoxid diskontinuierlich ergänzt. Fluoride bzw. Phosphate von Al, Fe, Zn und ggf. anderen Kationen fanden sich im sogenannten "Schlamm". Diese Fällungsprodukte setzten sich jedoch praktisch nicht auf den Blechoberflächen ab.

Bei den erfindungsgemäßen Phosphatierungsbädern ließ sich der Schlamm aufgrund seiner feinkristallinen lockeren Konsistenz ohne Druckstrahlen und ohne mechanische Einwirkung leicht von der Wandung der Behälter und Leitungen entfernen.

Eine gute Qualität der Beschichtung blieb bei diesen Versuchen trotz deutlicher Variation der chemischen Zusammensetzung der Phosphatierungslösung in breiten Bereichen erhalten. Somit boten die erfindungsgemäßen Phosphatierungslösungen eine weitere Möglichkeit, mit einer einfachen, sicheren, robusten, guten, kostengünstigen und schnellen Weise auch einen Metall-Mix zu beschichten, der geringe oder auch hohe Anteile an Aluminium-haltigen Oberflächen aufweist.

Die Phosphatschichten der erfindungsgemäßen Beispiele waren feinkristallin und geschlossen. Ihre Korrosionsbeständigkeit und Haftfestigkeit entsprach typischen Qualitätsstandards von ähnlichen Zinkphosphatschichten.

Die an den lackierten Stahlblechen vorgenommen Untersuchungen führten zu den folgenden Ergebnissen.

**Tabelle 2: Ergebnisse der Korrosionsschutz- und Lackhaftungsuntersuchungen auf lackierten Stahlblechen (* nach Schwitzwasser-Konstantklima-Test über 240 h nach DIN 50017 KK):**

| | Korrosion n. 12 Monaten Freibewitterung n. VDA 621-414 | Korrosion n. 10 Runden Salzsprüh-Kon-denswasser- Wechseltest n. VDA 621-415 | Lackhaftung n. 10 Runden Steinschlagtest n. DIN 55996-1 | Lackhaftung: Beschädigung beim Gitterschnitt nach DIN EN ISO 2409 | |
|---|---|---|---|---|---|
| | Unterwanderung | Unterwanderung | Lackabplatzungen | Note der Abplatzungen | |
| | mm | mm | Note | Beginn | KK-Test* |
| VB 1 | U < 1 | U 1,5 | 1,0 | Gt 0 | Gt 1 |
| VB 2 | U 3 | U 3,5 | 2,0 | Gt 1 | Gt 2 |
| VB 3 | U < 1 | U 1,0 | 1,0 | Gt 0 | Gt 1 |
| VB 4 | U 3 | U 2,5 | 2,0 | Gt 1 | Gt 2 |
| VB 5 | U 4 | U 5,0 | 3,0 | Gt 2 | Gt 4 |
| B9 | U<1 | U1,0 | 0,5 | Gt 0 | Gt 1 |
| B 10 | U < 1 | U 1,0 | 1,0 | Gt 0 | Gt 1 |
| B12 | U 2 | U 2,5 | 2,0 | Gt 1 | Gt 1 |
| B 22 | U 1 | U 2,0 | 2,0 | Gt 0 | Gt 1 |

Hierbei können Werte der Unterwanderung bis U 2 mm bei der Freibewitterung bzw. bis U 2,0 mm und bis Note 2 beim Steinschlagtest, der Lackabplatzungen bis 10 % und der Gitterschnittbenotung bis Gt 1 als ausreichend gut angesehen werden. Die Noten der Lackhaftung können zwischen 0 und 5 variieren, wobei 0 die beste Note ist.

Die erfindungsgemäß hergestellten Phosphatschichten sehen - insbesondere auf Stahloberflächen - gleichmäßiger und schöner als die der Vergleichsbeispiele aus. Rasterelektronische Aufnahmen belegten, dass die Phosphatkristalle durchschnittliche Kantenlängen im Bereich unter 15 µm und teilweise sogar nicht mehr als 8 µm aufweisen. Unter 8 µm lagen die Phosphatkristalle im wesentlichen isometrisch als im wesentlichen tafelig vor. Hierbei wurden rasterelektronenmikroskopische Aufnahmen bei senkrechter oder schräger Betrachtung der phosphatierten Stahloberflächen gewählt. Normalerweise machen insbesondere Stahloberflächen bei der Phosphatierqualität eher Probleme. Auch auf Stahloberflächen wurde aufgrund der Beschleuniger-Kombination Nitroguanidin-Wasserstoffperoxid trotz sparsameren Beschleuniger-Zusatzes eine weitere Verbesserung bezüglich der Gleichmäßigkeit und verbesserten Feinkörnigkeit der Phosphatschicht im Vergleich zu nur Wasserstoffperoxid- oder zu nur Nitroguanidinbeschleunigten Systemen gefunden, wobei die Vergleichssysteme auch Nitrat enthalten können. Es wurde gefunden, dass das System mit der erfindungsgemäßen Beschleuniger-Kombination erstaunlicherweise viel robuster zu fahren ist als die Phosphatiersysteme nur mit Wasserstoffperoxid oder nur mit Nitroguanidin.

In den -Versuchen mit erfindungsgemäßen Wasserstoffperoxid-beschleunigten Phosphatiersystemen konnte eine durchschnittliche Kantenlänge der Phosphatkristalle von weniger als 10 µm sicher eingehalten werden.

Darüber hinaus war es erstaunlich, dass die optimierte Phosphatierungstemperatur beim Tauchen um etwa 8 bis 10 °C gegenüber den Phosphatiersystemen nur mit Wasserstoffperoxid oder nur mit Nitroguanidin abgesenkt werden konnte, ohne dass eine Qualitätseinbuße in der Handhabung des Systems und der Beschichtungen eintrat. Daher sollte es ohne Probleme möglich sein, diese Beschleuniger-Kombination bei Temperaturen im Bereich von 40 bis 60 °C im Tauchen oder/und Spritzen, aber auch im Aufwalzen anzuwenden. Üblicherweise werden für Phosphatiersysteme nur mit Wasserstoffperoxid oder nur mit Nitroguanidin Temperaturen im Bereich oberhalb von 50 °C benötigt, da die Phosphatschichten sonst nicht ausreichend geschlossen ausgebildet werden. Auch die Temperaturabsenkung führte zu einer spürbaren Kostenersparnis.

Bei einer Tauchzeit von bis zu 3 Minuten konnten alle untersuchten Substrate gut mit einer feinkörnigen und geschlossenen Phosphatschicht beschichtet werden. Das Verfahren zeigte sich hierbei als außergewöhnlich robust, da stark schwankende Anteile an der einen oder der anderen Blechart keinerlei Probleme bereiteten. Außerdem konnte die Temperatur der Phosphatierungslösung gesenkt werden.

## Patentansprüche

1. Verfahren zur Behandlung oder Vorbehandlung von Oberflächen metallischer Gegenstände mit einer Zink und Phosphat enthaltenden, sauren, wässerigen Lösung, **dadurch gekennzeichnet, dass** die Phosphatierungslösung im Wesentlichen aus
- 0,1 bis 10 g/L Zink,
- gegebenenfalls 0,1 bis 10 g/L Mangan,
- gegebenenfalls 0,01 bis 1,8 g/L Nickel,
- Natrium, Kalium oder/und Ammonium, wobei die Summe an Natrium, Kalium und Ammonium 0,025 bis 70 g/L beträgt,
- 4 bis 50 g/L Phosphat, berechnet als PO₄,
- mindestens 0,03 und bis zu 1,5 g/L an mindestens einer Guanidin-Verbindung, die mindestens eine Nitrogruppe aufweist, berechnet als Nitroguanidin,
- mindestens 0,001 und bis zu 0,3 g/L Wasserstoffperoxid,
- gegebenenfalls 0,1 bis 30 g/L Nitrat,
- gegebenenfalls 0,01 bis 0,5 g/L Chlorid,
- gegebenenfalls 0,005 bis 5 g/L Sulfat,
- gegebenenfalls 0,005 bis 1 g/L freies Fluorid,
- gegebenenfalls 0,005 bis 6 g/L Gesamtfluorid und
- gegebenenfalls 0,005 bis 5 g/L Komplexfluorid
besteht und eine Temperatur von weniger als 80 °C aufweist.

2. Verfahren nach Anspruch 1, **dadurch gekennzeichnet, dass** die Gehalte der Phosphatierungslösung an Fe²⁺ 0,005 bis 1 g/L oder/und an komplexiertem Fe³⁺ 0,005 bis 0,5 g/L betragen.

3. Verfahren nach Anspruch 1 oder 2, **dadurch gekennzeichnet, dass** die Gehalte der Phosphatierungslösung an Natrium 0,04 bis 20 g/L, an Kalium 0,025 bis 35 g/L oder/und an Ammonium 0,01 bis 50 g/L betragen.

4. Verfahren nach einem der vorstehenden Ansprüche, **dadurch gekennzeichnet, dass** die Gehalte der Phosphatierungslösung an gelöstem Aluminium einschließlich komplexiertem Aluminium 0,002 bis 1 g/L betragen.

5. Verfahren nach einem der vorstehenden Ansprüche, **dadurch gekennzeichnet, dass** die Gehalte der Phosphatierungslösung an Kupfer 0,002 bis 0,05 g/L betragen.

6. Verfahren nach Anspruch 1, **dadurch gekennzeichnet, dass** die Gehalte der Phosphatierungslösung an Silicofluorid, berechnet als SiF₆, 0,005 bis 4,5 g/L oder/und an Borfluorid berechnet als BF₄, 0,005 bis 4,5 g/L betragen.

7. Verfahren nach einem der vorstehenden Ansprüche, **dadurch gekennzeichnet, dass** die Gehalte der Phosphatierungslösung an Titan 0,01 bis 2 g/L oder/und an Zirkonium 0,01 bis 2 g/L betragen.

8. Verfahren nach einem der vorstehenden Ansprüche, **dadurch gekennzeichnet, dass** die Phosphatierungslösung einen Gehalt an mindestens 0,001 g/L einer wasserlöslichen oder/und wasserdispergierbaren organischen polymeren Verbindung aufweist.

9. Verfahren nach einem der vorstehenden Ansprüche, **dadurch gekennzeichnet, dass** die Phosphatierungslösung im Wesentlichen aus
- 0,1 bis 10 g/L Zink,
- gegebenenfalls 0,1 bis 10 g/L Mangan,
- gegebenenfalls 0,01 bis 1,8 g/L Nickel,
- 0,025 bis 70 g/L Natrium, Kalium und Ammonium zusammen,
- gegebenenfalls 0,01 bis 2 g/L Titan oder/und 0,01 bis 2 g/L Zirkonium,
- 4 bis 50 g/L Phosphat, berechnet als PO₄,
- 0,005 bis 1 g/L freies Fluorid,
- 0,005 bis 6 g/L Gesamtfluorid,
- gegebenenfalls 0,005 bis 5 g/L der Summe der Komplexfluoride von B, Si, Ti, Hf oder/und Zr,
- gegebenenfalls 0,005 bis 4,5 g/L Silicofluorid oder/und 0,005 bis 4,5 g/L Borfluorid,
- 0,03 bis 3 g/L an mindestens einer Guanidin-Verbindung, die mindestens eine Nitrogruppe aufweist, berechnet als Nitroguanidin,
- 0,001 bis 0,9 g/L Wasserstoffperoxid,
- 0,1 bis 30 g/L Nitrat,
- gegebenenfalls 0,01 bis 0,5 g/L Chlorid,
- gegebenenfalls 0,005 bis 5 g/L Sulfat und
- gegebenenfalls 0,001 bis 0,5 g/L an mindestens einer wasserlöslichen oder/und wasserdispergierbaren organischen polymeren Verbindung
besteht.

10. Verfahren nach Anspruch 9, **dadurch gekennzeichnet, dass** die Phosphatierungslösung im Wesentlichen aus
- 0,2 bis 6 g/L Zink,
- gegebenenfalls 0,1 bis 5 g/L Mangan,
- gegebenenfalls 0,01 bis 1,6 g/L Nickel,
- 0,025 bis 40 g/L Natrium, Kalium und Ammonium zusammen,
- gegebenenfalls 0,01 bis 2 g/L Titan oder/und 0,01 bis 2 g/L Zirkonium,
- 5 bis 45 g/L Phosphat, berechnet als PO₄,
- 0,005 bis 1 g/L freies Fluorid,
- 0,005 bis 5 g/L Gesamtfluorid,
- gegebenenfalls 0,005 bis 4 g/L der Summe der Komplexfluoride von B, Si, Ti, Hf oder/und Zr,
- gegebenenfalls 0,005 bis 3,6 g/L Silicofluorid oder/und 0,005 bis 3,6 g/L Borfluorid,
- 0,03 bis 2 g/L an mindestens einer Guanidin-Verbindung, die mindestens eine Nitrogruppe aufweist, berechnet als Nitroguanidin,
- 0,001 bis 0,9 g/L Wasserstoffperoxid,
- 0,1 bis 20 g/L Nitrat,
- gegebenenfalls 0,01 bis 0,5 g/L Chlorid,
- gegebenenfalls 0,005 bis 3 g/L Sulfat und
- gegebenenfalls 0,002 bis 0,4 g/L an mindestens einer wasserlöslichen oder/und wasserdispergierbaren organischen polymeren Verbindung
besteht.

11. Verfahren nach einem der vorstehenden Ansprüche, **dadurch gekennzeichnet, dass** der S-Wert als Verhältnis der Zahl der Punkte der Freien Säure KCI - bzw. der Freien Säure - zu der Zahl der Punkte der Gesamtsäure Fischer im Bereich von 0,01 bis 0,40 liegt.

12. Verfahren nach einem der vorstehenden Ansprüche, **dadurch gekennzeichnet, dass** die metallischen Oberflächen bei einer Temperatur im Bereich von 30 bis 75 °C phosphatiert werden, insbesondere bei 35 bis 60 °C.

13. Verfahren nach einem der vorstehenden Ansprüche, **dadurch gekennzeichnet, dass** die metallischen Oberflächen - insbesondere beim Tauchen oder/und Spritzen - über eine Zeit im Bereich von 0,1 bis 8 Minuten mit der Phosphatierungslösung kontaktiert werden, beim Aufwalzen oder/und Aufsprühen am Band auch kürzere Kontaktierzeiten bis zu Bruchteilen einer Sekunde.

14. Verfahren nach einem der vorstehenden Ansprüche, **dadurch gekennzeichnet, dass** die metallischen Oberflächen eines Mixes von Gegenständen aus unterschiedlichen metallischen Materialien ausgewählt aus Aluminium, Aluminiumlegierung, Stahl, verzinktem Stahl und Zinklegierung phosphatiert werden.

15. Verfahren nach einem der vorstehenden Ansprüche, **dadurch gekennzeichnet, dass** die metallischen Oberflächen vor dem Phosphatieren gereinigt, gebeizt oder/und aktiviert werden, gegebenenfalls jeweils mit einem nachfolgenden Spülschritt.

16. Verfahren nach einem der vorstehenden Ansprüche, **dadurch gekennzeichnet, dass** die phosphatierten metallischen Oberflächen anschließend gespült, mit einer Nachspüllösung nachgespült, getrocknet oder/und mit jeweils mindestens einem Lack, einer Lack-artigen Beschichtung, einem Klebstoff oder/und einer Folie beschichtet werden.

17. Saure, wässerige Phosphatierungslösung im Wesentlichen bestehend aus
- 0,1 bis 10 g/L Zink,
- gegebenenfalls 0,1 bis 10 g/L Mangan,
- gegebenenfalls 0,01 bis 1,8 g/L Nickel,
- Natrium, Kalium oder/und Ammonium, wobei die Summe an Natrium, Kalium und Ammonium 0,025 bis 70 g/L beträgt,
- 4 bis 50 g/L Phosphat, berechnet als PO₄,
- mindestens 0,03 und bis zu 1,5 g/L an mindestens einer Guanidin-Verbindung, die mindestens eine Nitrogruppe aufweist, berechnet als Nitroguanidin,
- mindestens 0,001 und bis zu 0,3 g/L Wasserstoffperoxid,
- gegebenenfalls 0,1 bis 30 g/L Nitrat,
- gegebenenfalls 0,01 bis 0,5 g/L Chlorid,
- gegebenenfalls 0,005 bis 5 g/L Sulfat,
- gegebenenfalls 0,005 bis 1 g/L freies Fluorid,
- gegebenenfalls 0,005 bis 6 g/L Gesamtfluorid und
- gegebenenfalls 0,005 bis 5 g/L Komplexfluorid.

18. Saure, wässerige Lösung nach Anspruch 17, **dadurch gekennzeichnet, dass** sie auch einen Gehalt an
- 0,005 bis 5 g/L der Summe der Komplexfluoride von B, Si, Ti, Hf oder/und Zr,
- 0,005 bis 4,5 g/L Silicofluorid,
- 0,005 bis 4,5 g/L Borfluorid,
- 0,01 bis 2 g/L Titan,
- 0,01 bis 2 g/L Zirkonium oder/und
- 0,001 bis 0,5 g/L an mindestens einer wasserlöslichen oder/und wasserdispergierbaren organischen polymeren Verbindung
aufweist.

19. Verwendung des Verfahrens gemäß einem der Ansprüche 1 bis 16 zur Phosphatierung metallischer Gegenstände für Verwendung im Fahrzeugbau, insbesondere in der Automobilserienfertigung, für die Herstellung von Komponenten oder Karosserieteilen bzw. vormontierten Elementen in der Fahrzeug- oder Luftfahrtindustrie, in der Bauindustrie, in der Möbelindustrie, für die Herstellung von Geräten und Anlagen, insbesondere Haushaltsgeräten, Messgeräten, Kontrolleinrichtungen, Prüfeinrichtungen, Konstruktionselementen, Verkleidungen sowie von Kleinteilen.

20. Verwendung der sauren wässerigen Zusammensetzung gemäß einem der Ansprüche 17 und 18 zur Beschichtung metallischer Gegenstände für Verwendung im Fahrzeugbau, insbesondere in der Automobilserienfertigung, für die Herstellung von Komponenten oder Karosserieteilen bzw. vormontierten Elementen in der Fahrzeug- oder Luftfahrtindustrie, in der Bauindustrie, in der Möbelindustrie, für die Herstellung von Geräten und Anlagen, insbesondere Haushaltsgeräten, Messgeräten, Kontrolleinrichtungen, Prüfeinrichtungen, Konstruktionselementen, Verkleidungen sowie von Kleinteilen.

## Claims

1. Process for the treatment or pretreatment of surfaces of metallic objects with an acidic, aqueous solution containing zinc and phosphate, **characterized in that** the phosphating solution substantially comprises
- 0.1 to 10 g/l of zinc,
- optionally 0.1 to 10 g/l of manganese,
- optionally 0.1 to 1.8 g/l of nickel
- sodium, potassium or/and ammonium, where the total of sodium, potassium and ammonium is 0.025 to 70 g/l,
- 4 to 50 g/l of phosphate, calculated as PO₄,
- at least 0.03 and up to 1.5 g/l of at least one guanidine compound that contains at least one nitro group, calculated as nitroguanidine,
- at least 0.001 and up to 0.3 g/l of hydrogen peroxide,
- optionally 0.1 to 30 g/l of nitrate,
- optionally 0.01 to 0.5 g/l of chloride,
- optionally 0.005 to 5 g/l of sulfate,
- optionally 0.005 to 1 g/l of free fluoride,
- optionally 0.005 to 6 g/l of total fluoride and
- optionally 0.005 to 5 g/l of complex fluoride
and has a temperature of less than 80°C.

2. Process according to claim 1 or 2, **characterized in that** the contents in the phosphating solution of Fe²⁺ are 0.005 to 1 g/l or/and of complexed Fe³⁺ 0.005 to 0.5 g/l.

3. Process according to claim 1 or 2, **characterized in that** the contents of sodium in the phosphating solution are 0.04 to 20 g/l, of potassium 0.025 to 35 g/l or/and of ammonium 0.01 to 50 g/l.

4. Process according to one of the preceding claims, **characterized in that** the contents of dissolved aluminium, including complexed aluminium, in the phosphating solution are 0.002 to 1 g/l.

5. Process according to one of the preceding claims, **characterized in that** the contents of copper in the phosphating solution are 0.002 to 0.05 g/l.

6. Process according to claim 1, **characterized in that** the contents of silicofluoride, calculated as SiF₆, in the phosphating solution are 0.005 to 4.5 g/l or/and of boron fluoride, calculated as BF₄, 0.005 to 4.5 g/l.

7. Process according to one of the preceding claims, **characterized in that** the contents of titanium in the phosphating solution are 0.01 to 2 g/l, or/and of zirconium 0.01 to 2 g/1.

8. Process according to one of the preceding claims, **characterized in that** the phosphating solution has a content of at least 0.001 g/l of a water-soluble or/and water-dispersible organic polymeric compound.

9. Process according to one of the preceding claims, **characterized in that** the phosphating solution substantially comprises
- 0.1 to 10 g/l of zinc,
- optionally 0.1 to 10 g/l of manganese,
- optionally 0.01 to 1.8 g/l of nickel,
- 0.025 to 70 g/l of sodium, potassium and ammonium together,
- optionally 0.01 to 2 g/l of titanium or/and 0.01 to 2 g/l of zirconium,
- 4 to 50 g/l of phosphate, calculated as PO₄,
- 0.005 to 1 g/l of free fluoride,
- 0.005 to 6 g/l of total fluoride,
- optionally 0.005 to 5 g/l of the total of complex fluorides of B, Si, Ti, Hf or/and Zr,
- optionally 0.005 to 4.5 g/l of silicofluoride or/and 0.005 to 4.5 g/l of boron fluoride,
- 0.03 to 3 g/l of at least one guanidine compound that contains at least one nitro group, calculated as nitroguanidine,
- 0.001 to 0.9 g/l of hydrogen peroxide,
- 0.1 to 30 g/l of nitrate,
- optionally 0.01 to 0.5 g/l of chloride,
- optionally 0.005 to 5 g/l of sulfate and
- optionally 0.001 to 0.5 g/l of at least one water-soluble or/and water-dispersible organic polymeric compound.

10. Process according to claim 9, **characterized in that** the phosphating solution substantially comprises
- 0.2 to 6 g/l of zinc,
- optionally 0.1 to 5 g/l of manganese,
- optionally 0.01 to 1.6 g/l of nickel,
- 0.025 to 40 g/l of sodium, potassium and ammonium together,
- optionally 0.01 to 2 g/l of titanium or/and 0.01 to 2 g/l of zirconium,
- 5 to 45 g/l of phosphate, calculated as PO₄,
- 0.005 to 1 g/l of free fluoride,
- 0.005 to 5 g/l of total fluoride,
- optionally 0.005 to 4 g/l of the total of complex fluorides of B, Si, Ti, Hf or/and Zr,
- optionally 0.005 to 3.6 g/l of silicofluoride or/and 0.005 to 3.6 g/l of boron fluoride,
- 0.03 to 2 g/l of at least one guanidine compound that contains at least one nitro group, calculated as nitroguanidine,
- 0.001 to 0.9 g/l of hydrogen peroxide,
- 0.1 to 20 g/l of nitrate,
- optionally 0.01 to 0.5 g/l of chloride,
- optionally 0.005 to 3 g/l of sulfate and
- optionally 0.002 to 0.4 g/l of at least one water-soluble or/and water-dispersible organic polymeric compound.

11. Process according to one of the preceding claims, **characterized in that** the S value as the ratio of the number of points of free acid KC1 - or free acid - to the number of points of Fischer total acid is in the range from 0.01 to 0.40.

12. Process according to one of the preceding claims, **characterized in that** the metallic surfaces are phosphated at a temperature in the range from 30 to 75°C, in particular at 35 to 60°C.

13. Process according to one of the preceding claims, **characterized in that** the metallic surfaces - in particular during dipping or/and spraying - are brought into contact with the phosphating solution over a period of time in the range from 0.1 to 8 minutes, and in the case of rolling on or/and misting on using a belt also shorter contact times of down to fractions of a second.

14. Process according to one of the preceding claims, **characterized in that** the metallic surfaces of a mix of objects of different metallic materials chosen from aluminium, aluminium alloy, steel, galvanized steel and zinc alloy are phosphated.

15. Process according to one of the preceding claims, **characterized in that** the metallic surfaces are cleaned, pickled or/and activated, optionally in each case with a subsequent rinsing step, before the phosphating.

16. Process according to one of the preceding claims, **characterized in that** the phosphated metallic surfaces are then rinsed, after-rinsed with an after-rinsing solution, dried or/and coated with in each case at least one lacquer, one lacquer-like coating, one adhesive or/and one foil.

17. Acid, aqueous phosphating solution substantially comprising
- 0.1 to 10 g/l of zinc,
- optionally 0.1 to 10 g/l of manganese,
- optionally 0.01 to 1.8 g/l of nickel,
- sodium, potassium or/and ammonium, where the total of sodium, potassium and ammonium is 0.025 to 70 g/l,
- 4 to 50 g/l of phosphate, calculated as PO₄,
- at least 0.03 and up to 1.5 g/l of at least one guanidine compound that contains at least one nitro group, calculated as nitroguanidine,
- at least 0.001 and up to 0.3 g/l of hydrogen peroxide,
- optionally 0.1 to 30 g/l of nitrate,
- optionally 0.01 to 0.5 g/l of chloride,
- optionally 0.005 to 5 g/l of sulfate,
- optionally 0.005 to 1 g/l of free fluoride,
- optionally 0.005 to 6 g/l of total fluoride and
- optionally 0.005 to 5 g/l of complex fluoride.

18. Acidic, aqueous solution according to claim 17, **characterized in that** it also has a content of
- 0.005 to 5 g/l of the total of complex fluorides of B, Si, Ti, Hf or/and Zr,
- 0.005 to 4.5 g/l of silicofluoride,
- 0.005 to 4.5 g/l of boron fluoride,
- 0.01 to 2 g/l of titanium,
- 0.01 to 2 g/l of zirconium or/and
- 0.001 to 0.5 g/l of at least one water-soluble or/and water-dispersible organic polymeric compound.

19. Use of the process according to one of claims 1 to 16 for phosphating metallic objects for use in vehicle construction, in particular in automobile series production, for the production of components or vehicle body components or pre-assembled elements in the vehicle or air travel industry, in the construction industry, in the furniture industry, for the production of equipment and installations, in particular domestic appliances, measuring instruments, control installations, test equipment, construction elements, linings and of hardware items.

20. Use of the acidic aqueous composition according to one of claims 17 and 18 for coating metallic objects for use in vehicle construction, in particular in automobile series production, for the production of components or vehicle body components or pre-assembled elements in the vehicle or air travel industry, in the construction industry, in the furniture industry, for the production of equipment and installations, in particular domestic appliances, measuring instruments, control installations, test equipment, construction elements, linings and of hardware items.

## Revendications

1. Procédé de traitement ou de prétraitement de surfaces d'objets métalliques au moyen d'une solution aqueuse acide contenant des espèces zinc et phosphate, **caractérisé en ce que** cette solution de phosphatation contient principalement :
- 0,1 à 10 g/L de zinc,
- éventuellement 0,1 à 10 g/L de manganèse,
- éventuellement 0,01 à 1,8 g/L de nickel,
- des espèces sodium, potassium et/ou ammonium, en une quantité totale de 0,025 à 70 g/L,
- 4 à 50 g/L de phosphate, quantité calculée en PO₄,
- au moins 0,03 g/L et jusqu'à 1,5 g/L d'au moins un dérivé de guanidine comportant au moins un groupe nitro, quantité calculée en nitroguanidine,
- au moins 0,001 g/L et jusqu'à 0,3 g/L de peroxyde d'hydrogène,
- éventuellement 0,1 à 30 g/L de nitrate,
- éventuellement 0,01 à 0,5 g/L de chlorure,
- éventuellement 0,005 à 5 g/L de sulfate,
- éventuellement 0,005 à 1 g/L de fluorure libre,
- éventuellement 0,005 à 6 g/L de fluorures, au total,
- et éventuellement 0,005 à 5 g/L de fluorures complexes,
et se trouve à une température inférieure à 80 °C.

2. Procédé conforme à la revendication 1, **caractérisé en ce que** la solution de phosphatation contient 0,005 à 1 g/L d'ions Fe²⁺ et/ou 0,005 à 0,5 g/L d'ions Fe³⁺ complexés.

3. Procédé conforme à la revendication 1 ou 2, **caractérisé en ce que** la solution de phosphatation contient 0,04 à 20 g/L de sodium, 0,025 à 35 g/L de potassium et/ou 0,01 à 50 g/L d'ammonium.

4. Procédé conforme à l'une des revendications précédentes, **caractérisé en ce que** la solution de phosphatation contient 0,002 à 1 g/L d'aluminium dissous, y compris l'aluminium complexé.

5. Procédé conforme à l'une des revendications précédentes, **caractérisé en ce que** la solution de phosphatation contient 0,002 à 0,05 g/L de cuivre.

6. Procédé conforme à la revendication 1, **caractérisé en ce que** la solution de phosphatation contient 0,005 à 4,5 g/L de silicofluorure, quantité calculée en SiF₆, et/ou 0,005 à 4,5 g/L de borofluorure, quantité calculée en BF₄.

7. Procédé conforme à l'une des revendications précédentes, **caractérisé en ce que** la solution de phosphatation contient 0,01 à 2 g/L de titane et/ou 0,01 à 2 g/L de zirconium.

8. Procédé conforme à l'une des revendications précédentes, **caractérisé en ce que** la solution de phosphatation contient au moins 0,001 g/L d'un composé polymère organique soluble dans l'eau et/ou dispersable dans l'eau.

9. Procédé conforme à l'une des revendications précédentes, **caractérisé en ce que** la solution de phosphatation contient principalement :
- 0,1 à 10 g/L de zinc,
- éventuellement 0,1 à 10 g/L de manganèse,
- éventuellement 0,01 à 1,8 g/L de nickel,
- 0,025 à 70 g/L, au total, de sodium, potassium et ammonium,
- éventuellement 0,01 à 2 g/L de titane et/ou 0,01 à 2 g/L de zirconium
- 4 à 50 g/L de phosphate, quantité calculée en PO₄,
- 0,005 à 1 g/L de fluorure libre,
- 0,005 à 6 g/L de fluorures, au total,
- éventuellement 0,005 à 5 g/L, au total, de fluorures complexes dérivés de B, Si, Ti, Hf et/ou Zr,
- éventuellement 0,005 à 4,5 g/L de silicofluorure et/ou 0,005 à 4,5 g/L de borofluorure,
- 0,03 à 1,5 g/L d'au moins un dérivé de guanidine comportant au moins un groupe nitro, quantité calculée en nitroguanidine,
- 0,001 à 0,3 g/L de peroxyde d'hydrogène,
- 0,1 à 30 g/L de nitrate,
- éventuellement 0,01 à 0,5 g/L de chlorure,
- éventuellement 0,005 à 5 g/L de sulfate,
- et éventuellement 0,001 à 0,5 g/L d'un composé polymère organique soluble dans l'eau et/ou dispersable dans l'eau.

10. Procédé conforme à la revendication 9, **caractérisé en ce que** la solution de phosphatation contient principalement
- 0,2 à 6 g/L de zinc,
- éventuellement 0,1 à 5 g/L de manganèse,
- éventuellement 0,01 à 1,6 g/L de nickel,
- 0,025 à 40 g/L, au total, de sodium, potassium et ammonium,
- éventuellement 0,01 à 2 g/L de titane et/ou 0,01 à 2 g/L de zirconium
- 5 à 45 g/L de phosphate, quantité calculée en PO₄,
- 0,005 à 1 g/L de fluorure libre,
- 0,005 à 5 g/L de fluorures, au total,
- éventuellement 0,005 à 4 g/L, au total, de fluorures complexes dérivés de B, Si, Ti, Hf et/ou Zr,
- éventuellement 0,005 à 3,6 g/L de silicofluorure et/ou 0,005 à 3,6 g/L de borofluorure,
- 0,03 à 1,5 g/L d'au moins un dérivé de guanidine comportant au moins un groupe nitro, quantité calculée en nitroguanidine,
- 0,001 à 0,3 g/L de peroxyde d'hydrogène,
- 0,1 à 20 g/L de nitrate,
- éventuellement 0,01 à 0,5 g/L de chlorure,
- éventuellement 0,005 à 3 g/L de sulfate,
- et éventuellement 0,002 à 0,4 g/L d'un composé polymère organique soluble dans l'eau et/ou dispersable dans l'eau.

11. Procédé conforme à l'une des revendications précédentes, **caractérisé en ce que** l'indice S, c'est-à-dire le rapport du nombre de points d'acide libre en présence de chlorure de potassium (FS-KC1) ou d'acide libre (FS) au nombre de points d'acidité totale selon Fischer (GSF), se trouve dans l'intervalle allant de 0,01 à 0,40.

12. Procédé conforme à l'une des revendications précédentes, **caractérisé en ce qu'**on réalise la phosphatation des surfaces métalliques à une température de 30 à 75 °C, en particulier de 35 à 60 °C.

13. Procédé conforme à l'une des revendications précédentes, **caractérisé en ce qu'**on laisse les surfaces métalliques en contact avec la solution de phosphatation, en particulier dans le cas d'une application par immersion ou par aspersion, pendant un laps de temps de 0,1 à 8 minutes ou même, dans le cas d'une application au rouleau et/ou par pulvérisation dans la chaîne de production, pendant un laps de temps plus court, qui peut aller jusqu'à se réduire à quelques fractions de seconde.

14. Procédé conforme à l'une des revendications précédentes, **caractérisé en ce qu'**on réalise la phosphatation des surfaces métalliques d'un ensemble d'objets en différents matériaux métalliques choisis parmi l'aluminium, les alliages d'aluminium, l'acier, l'acier zingué et les alliages de zinc.

15. Procédé conforme à l'une des revendications précédentes, **caractérisé en ce qu'**avant de réaliser la phosphatation des surfaces métalliques, on leur fait subir un nettoyage, un décapage et/ou une activation, éventuellement suivi(s) dans chaque cas d'un rinçage.

16. Procédé conforme à l'une des revendications précédentes, **caractérisé en ce qu'**après phosphatation, les surfaces métalliques sont ensuite rincées, post-rincées avec une solution de post-rinçage, séchées et/ou couvertes d'au moins une couche de vernis, de revêtement de type vernis et/ou de colle et/ou d'au moins une feuille mince.

17. Solution aqueuse acide de phosphatation, qui contient principalement :
- 0,1 à 10 g/L de zinc,
- éventuellement 0,1 à 10 g/L de manganèse,
- éventuellement 0,01 à 1,8 g/L de nickel,
- des espèces sodium, potassium et/ou ammonium, en une quantité totale de 0,025 à 70 g/L,
- 4 à 50 g/L de phosphate, quantité calculée en PO₄,
- au moins 0,03 g/L et jusqu'à 1,5 g/L d'au moins un dérivé de guanidine comportant au moins un groupe nitro, quantité calculée en nitroguanidine,
- au moins 0,001 g/L et jusqu'à 0,3 g/L de peroxyde d'hydrogène,
- éventuellement 0,1 à 30 g/L de nitrate,
- éventuellement 0,01 à 0,5 g/L de chlorure,
- éventuellement 0,005 à 5 g/L de sulfate,
- éventuellement 0,005 à 1 g/L de fluorure libre,
- éventuellement 0,005 à 6 g/L de fluorures, au total,
- et éventuellement 0,005 à 5 g/L de fluorures complexes.

18. Solution aqueuse acide de phosphatation, conforme à la revendication 17, **caractérisée en ce qu'**elle contient :
- 0,005 à 5 g/L, au total, de fluorures complexes dérivés de B, Si, Ti, Hf et/ou Zr,
- 0,005 à 4,5 g/L de silicofluorure,
- 0,005 à 4,5 g/L de borofluorure,
- 0,01 à 2 g/L de titane,
- 0,01 à 2 g/L de zirconium
- et/ou 0,001 à 0,5 g/L d'au moins un composé polymère organique soluble dans l'eau et/ou dispersable dans l'eau.

19. Emploi d'un procédé conforme à l'une des revendications 1 à 16 pour la phosphatation d'objets métalliques conçus pour servir à la construction de véhicules automobiles, en particulier à la fabrication d'automobiles en série, à la fabrication de composants ou de pièces de carrosserie ou d'éléments pré-montés dans l'industrie automobile ou l'industrie aéronautique, dans l'industrie du bâtiment ou dans la fabrication industrielle de meubles, ou à la fabrication d'appareils et de dispositifs, en particulier d'appareils ménagers, d'appareils de mesure, de dispositifs de contrôle ou de vérification, d'éléments de construction, de revêtements ou de petites pièces.

20. Emploi d'une composition aqueuse acide conforme à l'une des revendications 17 et 18 pour en enduire des objets métalliques conçus pour servir à la construction de véhicules automobiles, en particulier à la fabrication d'automobiles en série, à la fabrication de composants ou de pièces de carrosserie ou d'éléments pré-montés dans l'industrie automobile ou l'industrie aéronautique, dans l'industrie du bâtiment ou dans la fabrication industrielle de meubles, ou à la fabrication d'appareils et de dispositifs, en particulier d'appareils ménagers, d'appareils de mesure, de dispositifs de contrôle ou de vérification, d'éléments de construction, de revêtements ou de petites pièces.
